# EUROPEAN PATENT SPECIFICATION

(11) **EP 4 432 010 B1**
(45) Date of publication and mention of the grant of the patent: **03.06.2026**
(21) Application number: 24163722.2
(22) Date of filing: 15.03.2024
(51) Int. Cl.: G03B 21/20, G02B 19/00, G02B 26/10, G02B 27/00, G02B 27/12, G02B 27/14, G02B 27/18

(54) **LIGHT SOURCE DEVICE AND PROJECTOR**
LICHTQUELLENVORRICHTUNG UND PROJEKTOR
DISPOSITIF DE SOURCE DE LUMIÈRE ET PROJECTEUR

(30) Priority: 17.03.2023 JP 2023043616
(43) Date of publication of application: 18.09.2024
(73) Proprietor: Seiko Epson Corporation, Tokyo 160-8801 (JP)
(72) Inventor: YONEYAMA, Takuo, Suwa-shi, 392-8502 (JP)
(74) Representative: Lewis Silkin LLP

(56) References cited:
- JP-A- H0 822 006
- KR-A- 20200 082 229
- US-A1- 2007 159 605
- US-A1- 2007 171 646
- US-A1- 2023 066 382
- SHIMIZU J A: "SINGLE PANEL REFLECTIVE LCD PROJECTOR", 19990126, vol. 3634, 26 January 1999 (1999-01-26), pages 197 - 206, XP000992303, DOI: 10.1117/12.349355

## Description

### BACKGROUND

### 1. Technical Field

The present disclosure relates to a light source device and a projector.

### 2. Related Art

As a light source device to be used in a projector, there has been proposed a light source device for illuminating a light modulation device such as a liquid crystal panel by temporally scanning the light modulation device with light emitted from a light emitting element.

In JP-A-2007-225956 (Document 1), there is disclosed a projector provided with a light source device including a light source lamp, a liquid crystal light valve, a polygon mirror disposed between the light source device and the liquid crystal light valve, and a projection lens. In this projector, the light source device emits light having an elliptical flux sectional shape. The polygon mirror reflects the light emitted from the light source device to thereby scan an image forming area of the liquid crystal light valve in a short axis direction of the elliptical flux sectional shape.

However, when using the polygon mirror for the scanning with the light as in the projector of Document 1, even when making completely parallel light enter the polygon mirror, the parallelism of the light is impaired by the polygon mirror. Specifically, since the polygon mirror reflects the light while rotating, an incident angle of the light with respect to a reflecting surface of the polygon mirror temporally changes, and the parallel light having entered the polygon mirror turns to light having a predetermined divergence angle to illuminate the liquid crystal light valve. As a result, there is a possibility that a variety of problems related to the image quality of the projector such as degradation of luminance or contrast in the liquid crystal light valve, an occurrence of color unevenness, and a loss of light in the projection lens.

JP H08 22006 discloses a liquid crystal projector that has a light source, a reflector for reflecting and condensing the light from this light source, a means for separating the condensed luminous fluxes to the luminous fluxes of three colors: red, green and blue, the liquid crystal panel, and a columnar body having a regular polygonal section having opposite parallel planes axisymmetrical with the axis of rotation. In addition, the projector has a rotary prism which scans the surface of the liquid crystal panel with the stripes of three colors by receiving the luminous fluxes of the three colors on its side face and irradiates the surface of the liquid crystal panel with luminous fluxes to a stripe form these. One of the luminous fluxes of the three colors is used as a main optical axis and this main optical axis is intersected orthogonally with the axis of rotation. The liquid crystal projector has a pair of incident means which incline the remaining two of the luminous fluxes of the three colors as auxiliary optical axes symmetrically with the main optical axis and intersect these auxiliary optical axes with the intersected point of the main optical axis and the axis of rotation, and assembling means which arrange the auxiliary optical axes parallel with the main optical axis.
KR 2020 0082229 is also relevant.

### SUMMARY

In view of the problems described above, a light source device according to the invention is defined in claim 1.

A projector according to the invention includes the light source device described above, a light modulation device configured to modulate light including the first light beam, the second light beam, and the third light beam emitted from the transmissive optical part of the light source device based on image information, and a projection optical device configured to project the light modulated by the light modulation device.

### BRIEF DESCRIPTION OF THE DRAWINGS

FIG. 1 is a plan view showing a schematic configuration of a projector according to a first embodiment.
FIG. 2 is a side view of the projector.
FIG. 3 is a perspective view of a transmissive optical part.
FIG. 4 is a schematic diagram showing light beams emitted from a second light source.
FIG. 5A is a schematic diagram for explaining a behavior of the light beam when the transmissive optical part rotates.
FIG. 5B is a schematic diagram showing a behavior following the behavior shown in FIG. 5A.
FIG. 5C is a schematic diagram showing a behavior following the behavior shown in FIG. 5B.
FIG. 5D is a schematic diagram showing a behavior following the behavior shown in FIG. 5C.
FIG. 5E is a schematic diagram showing a behavior following the behavior shown in FIG. 5D.
FIG. 5F is a schematic diagram showing a behavior following the behavior shown in FIG. 5E.
FIG. 6 is a diagram showing a relationship between an illuminance distribution and a propagation distance of light.
FIG. 7 is a cross-sectional view of a light modulation device.
FIG. 8 is a plan view showing a schematic configuration of a projector according to a second embodiment.
FIG. 9 is a plan view showing a schematic configuration of a projector according to a third embodiment.
FIG. 10 is a side view of the projector.
FIG. 11 is a plan view showing a schematic configuration of a projector according to a fourth embodiment.
FIG. 12 is a side view of the projector.
FIG. 13 is a plan view showing a schematic configuration of a projector according to a fifth embodiment.
FIG. 14 is a schematic diagram showing how scanning with three colored light beams is performed on the light modulation device.
FIG. 15 is a plan view showing a schematic configuration of a projector according to a sixth embodiment.
FIG. 16 is a plan view showing a schematic configuration of a projector according to a seventh embodiment.
FIG. 17 is a plan view showing a schematic configuration of a projector according to an eighth embodiment.

### DESCRIPTION OF EXEMPLARY EMBODIMENTS

### First Embodiment

A first embodiment of the present disclosure will hereinafter be described using the drawings.

A projector according to the present embodiment is an example of a liquid crystal projector using a liquid crystal panel as a light modulation device.

In the drawings described below, constituents are shown with respective dimensional scale ratios different from each other in some cases in order to make the constituents eye-friendly.

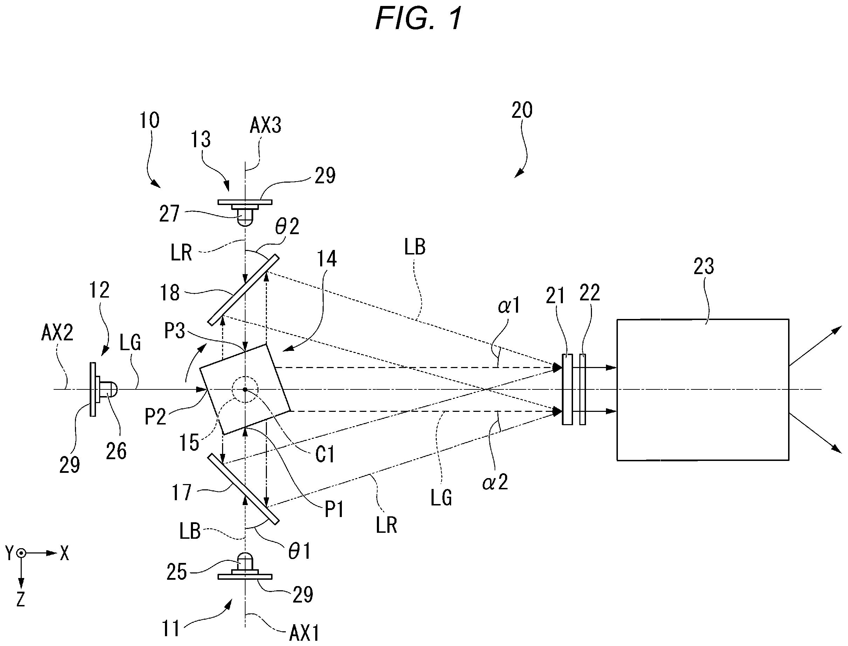

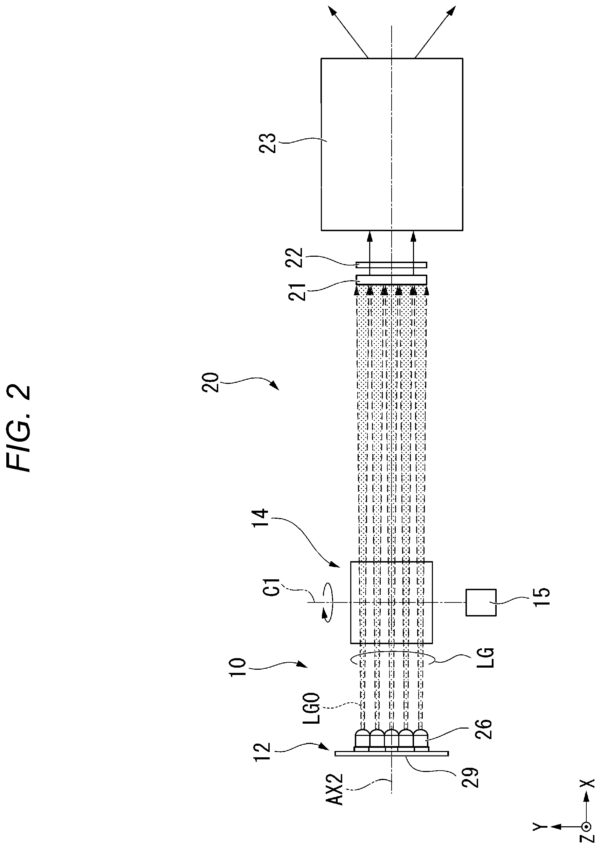

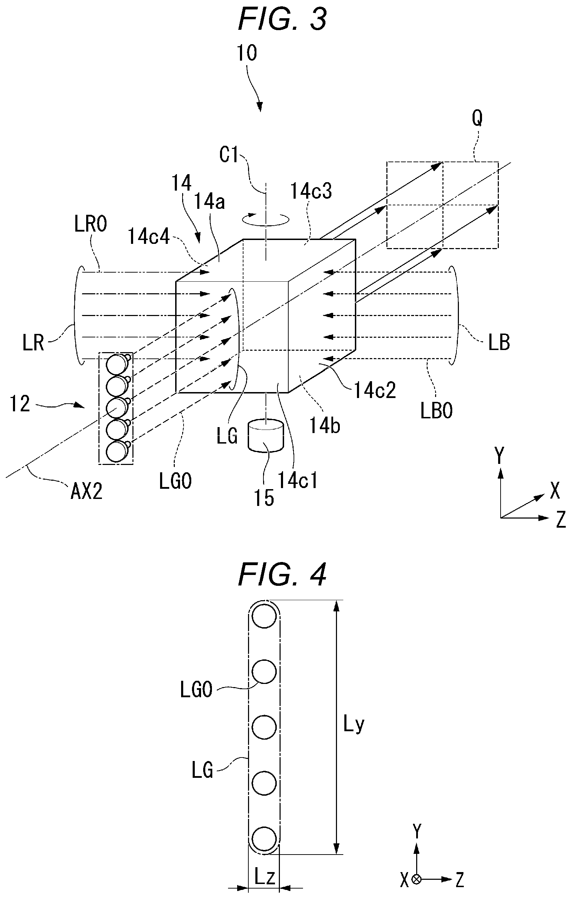

FIG. 1 is a plan view showing a schematic configuration of the projector 20 according to the present embodiment. FIG. 2 is a side view showing a schematic configuration of the projector 20. In FIG. 2, illustration of a first light source 11, a third light source 13, a first reflecting element 17, a second reflecting element, and so on is omitted. FIG. 3 is a perspective view of a transmissive optical part 14.

As shown in FIG. 1 and FIG. 2, the projector 20 according to the present embodiment is provided with a light source device 10, a light modulation device 21, an exit side polarization plate 22, and a projection optical device 23.

The light source device 10 according to the present embodiment is provided with the first light source 11, a second light source 12, the third light source 13, the transmissive optical part 14, a rotary drive device 15, the first reflecting element 17, and the second reflecting element 18.

Hereinafter, in the drawings, the explanation will be presented using an XYZ orthogonal coordinate system as needed. The X axis is an axis parallel to an optical axis AX2 of the second light source 12. The optical axis AX2 of the second light source 12 is defined as an axis extending along a principal ray of a second light beam LG emitted from the second light source 12. The Y axis is an axis perpendicular to the X axis, and is an axis extending along a rotational axis C1 of the transmissive optical part 14. The Z axis is an axis perpendicular to the X axis and the Y axis, and is an axis parallel to an optical axis AX1 of the first light source 11 and an optical axis AX3 of the third light source 13. The optical axis AX1 of the first light source 11 is defined as an axis extending along a principal ray of a first light beam LB emitted from the first light source 11. The optical axis AX3 of the third light source 13 is defined as an axis extending along a principal ray of a third light beam LR emitted from the third light source 13.

The Y-axis direction in the present embodiment corresponds to a first direction in the appended claims. The Z-axis direction in the present embodiment corresponds to a second direction in the appended claims.

As shown in FIG. 1, the first light source 11 emits the first light beam LB in a first wavelength band toward the transmissive optical part 14 (the -Z side). The second light source 12 emits the second light beam LG in a second wavelength band toward the transmissive optical part 14 (the +X side). The third light source 13 emits the third light beam LR in a third wavelength band toward the transmissive optical part 14 (the +Z side).

The optical axis AX1 of the first light source 11 and the optical axis AX3 of the third light source 13 are located on the same axis. The optical axis AX2 of the second light source 12 is perpendicular to the optical axis AX1 of the first light source 11 and the optical axis AX3 of the third light source 13. According to this configuration, when, for example, each of the light sources is provided with a cooling member such as a heatsink, there is no need to obliquely arrange the cooling member, a flow path of cooling air, and so on. Thus, it is possible to increase the degree of freedom of the layout of the components constituting the projector 20, and at the same time, it is possible to achieve a reduction in size of the projector 20.

The light sources 11, 12, and 13 are substantially the same in basic configuration as each other, but the detailed configuration of the second light source 12 is illustrated in FIG. 2 and FIG. 3, and therefore, the specific configuration of the second light source 12 will be described using FIG. 2 and FIG. 3.

As shown in FIG. 2 and FIG. 3, the second light source 12 is provided with a plurality of second light emitting elements 26 and a substrate 29. The second light emitting elements 26 are each formed of a laser diode for emitting a light beam LG0 in the second wavelength band. Therefore, the light beam LG0 to be emitted from the second light emitting element 26 is linearly polarized light having coherency, and is a laser beam narrow in flux width, and high in parallelism. The second wavelength band is a green wavelength band of, for example, 530 nm ±5 nm. In other words, the light beam LG0 to be emitted from the second light emitting element 26 is the green light beam.

The plurality of second light emitting elements 26 is arranged along the Y-axis direction in a row at predetermined intervals. Although the second light source 12 is provided with the five second light emitting elements 26 in the present embodiment, the number of the second light emitting elements 26 is not particularly limited, and it is sufficient for the plurality of second light emitting elements 26 to be arranged in a row along the Y-axis direction.

FIG. 4 is a diagram showing a cross-sectional surface perpendicular to a proceeding direction of the second light beam LG emitted from the second light source 12. In the case of the present embodiment, since the light beam LG0 is emitted from each of the five second light emitting elements 26, the second light beam LG emitted from the second light source 12 is a whole of the light flux including five light beams LG0 as shown in FIG. 4. Therefore, an outer edge of the second light beam LG is defined as an outer edge of a diagram circumscribing the five light beams LG0. Further, the principal ray of the second light beam LG is defined as a light beam passing through the center of the diagram circumscribing the five light beams LG0. In this case, the cross-sectional shape perpendicular to the principal ray of the second light beam LG is a strip-like shape having a long axis extending along the Y-axis direction, and a short axis extending along the Z-axis direction. It is desirable for the length Lz of the short axis of the cross-sectional shape perpendicular to the principal ray of the second light beam LG to appropriately be shorter compared to the length LVz of a short axis extending along the Z-axis direction of the light modulation device 21. For example, a ratio Lz/LVz of the length Lz of the short axis of the cross-sectional shape perpendicular to the principal ray of the second light beam LG to the length LVz of the short axis of the light modulation device 21 is desirably no higher than 1/2. Taking area illumination described later into consideration, the ratio Lz/LVz is more desirably no higher than 1/4. The second light beam LG is hereinafter referred to as a green light beam LG. According to the present embodiment, it is possible to generate the light having the cross-sectional shape having the long axis extending along the Y-axis direction without using an optical system such as a flux width adjustment optical system.

The substrate 29 supports the plurality of second light emitting elements 26. Although not shown in the drawings, a heatsink for cooling the plurality of second light emitting elements 26 can be disposed on an opposite side to the side at which the plurality of second light emitting elements 26 is disposed out of two principal surfaces of the substrate 29.

As shown in FIG. 1, the first light source 11 is provided with a plurality of first light emitting elements 25 and the substrate 29. The first light emitting elements 25 are each formed of a laser diode for emitting a light beam LB0 in the first wavelength band. Therefore, the light beam LB0 to be emitted from the first light emitting element 25 is linearly polarized light having coherency, and is a laser beam narrow in flux width, and high in parallelism. The first wavelength band is a blue wavelength band of, for example, 450 nm ±5 nm. In other words, the light beam LB0 to be emitted from the first light emitting element 25 is the blue light beam. It should be noted that the laser diode is cited as the first light emitting element 25 in the present embodiment, but this is not a limitation, and the laser diode can be replaced by using a light source such as an LED or a lamp, an optical system for adjusting the polarization direction of light, an optical system for adjusting a flux width, a color wheel, and so on to generate a light beam having the ratio Lz/LVz no higher than 1/2.

The plurality of first light emitting elements 25 is arranged in a row at predetermined intervals along the Y-axis direction, namely a direction perpendicular to the sheet of FIG. 1. Although the first light source 11 is provided with the five first light emitting elements 25 in the present embodiment, the number of the first light emitting elements 25 is not particularly limited, and it is sufficient for the plurality of first light emitting elements 25 to be arranged in a row along the Y-axis direction. The first light beam LB is hereinafter referred to as a blue light beam LB.

The third light source 13 is provided with a plurality of third light emitting elements 27 and the substrate 29. The third light emitting elements 27 are each formed of a laser diode for emitting a light beam LR0 in the third wavelength band. Therefore, the light beam LR0 to be emitted from the third light emitting element 27 is linearly polarized light having coherency, and is a laser beam narrow in flux width, and high in parallelism. The third wavelength band is a red wavelength band of, for example, 650 nm ±5 nm. In other words, the light beam LR0 to be emitted from the third light emitting element 27 is the red light beam.

The plurality of third light emitting elements 27 is arranged in a row at predetermined intervals along the Y-axis direction, namely a direction perpendicular to the sheet of FIG. 1. Although the third light source 13 is provided with the five third light emitting elements 27 in the present embodiment, the number of the third light emitting elements 27 is not particularly limited, and it is sufficient for the plurality of third light emitting elements 27 to be arranged in a row along the Y-axis direction. The third light beam LR is hereinafter referred to as a red light beam LR.

As shown in FIG. 1, the transmissive optical part 14 is disposed at a position where the optical axis AX1 and the optical axis AX3 cross the optical axis AX2. The transmissive optical part 14 is formed of a light transmissive member rotatably supported. As a glass material of the light transmissive member constituting the transmissive optical part 14, there is used a light transmissive material such as optical glass such as BK7, quartz, or resin. The transmissive optical part 14 is made rotatable centering on a rotational axis C1 extending along the Y-axis direction. The rotational axis C1 is coupled to the rotary drive device 15 formed of a motor or the like. The transmissive optical part 14 rotates centering on the rotational axis C1 due to the drive by the rotary drive device 15.

As shown in FIG. 3, the transmissive optical part 14 has a first surface 14a and a second surface 14b crossing the rotational axis C1, and four side surfaces 14c1, 14c2, 14c3 and 14c4 having perpendicular contact with the first surface 14a and the second surface 14b. In other words, the shape of the transmissive optical part 14 is a regular quadrangular prism having six planes including the first surface 14a, the second surface 14b, and the four side surfaces 14c1, 14c2, 14c3, and 14c4. The cross-sectional shape of the transmissive optical part 14 cut by a plane perpendicular to the rotational axis C1 is a square. In other words, the four side surfaces 14c1, 14c2, 14c3, and 14c4 have the areas the same as each other, and the two side surfaces opposed to each other are parallel to each other.

The transmissive optical part 14 transmits each of the blue light beam LB, the green light beam LG, and the red light beam LR emitted from the respective light sources 11, 12, and 13 while rotating centering on the rotational axis C1. Therefore, the side surfaces which the respective colored light beams LB, LG, and LR emitted from the respective light sources 11, 12, and 13 enter are not uniquely fixed, but change according to time. In the transmissive optical part 14, the side surfaces which the respective colored light beams emitted from the respective light sources 11, 12, and 13 enter are referred to as planes of incidence. The side surfaces which emit the respective colored light beams LB, LG, and LR entering the transmissive optical part 14 from the planes of incidence are referred to as exit surfaces. In this case, the plane of incidence and the exit surface change according to time, and are any of pairs of side surfaces parallel to each other out of the four side surfaces 14c1, 14c2, 14c3, and 14c4.

In the present specification, when describing that the two side surfaces of the transmissive optical part 14 are parallel to each other, there is described as "parallel" when an angle between the two side surfaces is within a range of 0±5 degrees taking a processing accuracy of the glass material forming the light transmissive member, an allowable range of the parallelism of the light, and so on into consideration.

As shown in FIG. 1, the blue light beam LB enters the transmissive optical part 14 at a first position P1. The green light beam LG enters the transmissive optical part 14 at a second position P2 different from the first position P1. The red light beam LR enters the transmissive optical part 14 at a third position P3 different from the first position P1 and the second position P2. In other words, the blue light beam LB, the green light beam LG, and the red light beam LR enter the transmissive optical part 14 at respective positions different from each other. In particular in the case of the present embodiment, since the first light source 11, the second light source 12, and the third light source 13 are in a positional relationship rotated by 90 degrees centering on an intersection of the optical axes AX1, AX3 and the optical axis AX2, the blue light beam LB, the green light beam LG, and the red light beam LR enter the respective side surfaces of the transmissive optical part 14 different from each other.

In the case of the present embodiment, the transmissive optical part 14 has the four side surfaces 14c1, 14c2, 14c3, and 14c4, but the number of the side surfaces is not necessarily required to be four, and is desirably 2×m (m is a natural number no smaller than 2). In other words, it is desirable for the number of the side surfaces to be an even number such as six or eight. When the number of the side surfaces is an even number, each of all of the side surfaces becomes parallel to a side surface opposed to that side surface, and a side surface which does not have a counterpart parallel thereto does not exist. Thus, the occurrence of stray light in the transmissive optical part 14 is little, and thus, it is possible to increase the light use efficiency.

The transmissive optical part 14 can be formed of quartz. In the transmissive optical part 14, as an amount of light transmitted through the light transmissive member increases, an amount of light absorbed by the light transmissive member increases, and a thermal strain occurs in the light transmissive member in some cases. In this case, the polarization directions of the respective colored light beams LB, LG, and LR emitted from the respective light sources 11, 12, and 13 are disturbed, and the linearly polarized light having entered the light transmissive member turns to elliptically-polarized light and is then emitted from the light transmissive member. As a result, in the projector 20, it becomes unachievable to obtain an advantage that it is possible to obtain a predetermined contrast without being provided with an incidence side polarization plate by using a laser diode as each of the light emitting elements. In other words, although the laser diode is used in each of the light emitting elements, there occurs a necessity of using the incidence side polarization plate for uniforming the polarization direction. Therefore, in order to obtain the advantage described above, it is desirable to use the glass material low in Young's modulus and thermal expansion coefficient as the glass material small in thermal strain, and it is desirable to use quartz as an example.

A behavior of the colored light beams LB, LG, and LR when the colored light beams are transmitted through the transmissive optical part 14 will hereinafter be described. It should be noted that the colored light beams LB, LG, and LR are different in incident direction and exit direction from each other, but the behavior is common to the colored light beams LB, LG, and LR. Therefore, here, description will be presented using the green light beam LG emitted from the second light source 12.

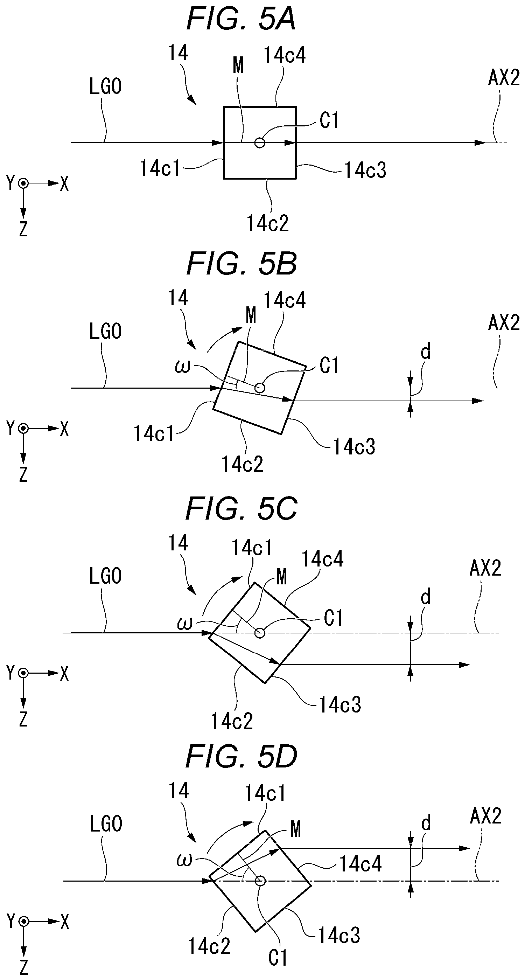

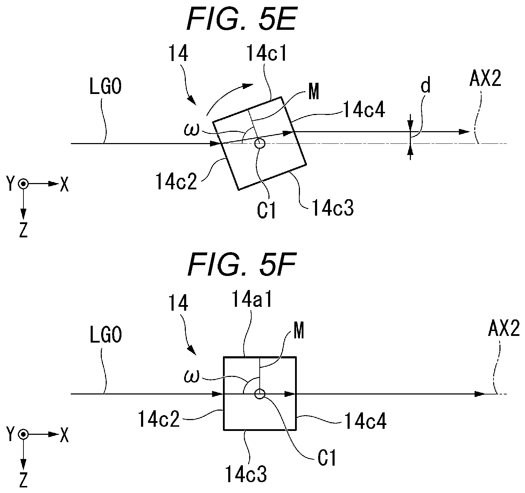

FIG. 5A through FIG. 5F are schematic diagrams for explaining the behavior of the green light beam LG when the transmissive optical part 14 rotates. In this example, there is shown a state in which the transmissive optical part 14 rotates clockwise centering on the rotational axis C1 when viewed from the +Y side, and the time passes from FIG. 5A toward FIG. 5F.

In FIG. 5A through FIG. 5F, an angle between the optical axis AX2 and a straight line M which passes through the rotational axis C1 and is perpendicular to the side surface 14c1 of the transmissive optical part 14 is defined as a rotational angle ω. In reality, the green light beam LG has a predetermined flux width in the Z-axis direction, but here, the consideration is made focusing attention on the behavior of the light beam LG0 proceeding on the optical axis AX2.

FIG. 5A shows an initial state of the transmissive optical part 14. Specifically, the transmissive optical part 14 does not rotate, the straight line M and the optical axis AX2 overlap each other, and the rotational angle ω is 0 degree. In this case, the light beam LG0 perpendicularly enters the side surface 14c1, and therefore, proceeds through the transmissive optical part 14 along the optical axis AX2 without being refracted on the side surface 14c1. Then, the light beam LG0 also perpendicularly enters the side surface 14c3 parallel to the side surface 14c1. Therefore, the light beam is emitted from the transmissive optical part 14 without being refracted on the side surface 14c3, and proceeds on the optical axis AX2.

Then, as shown in FIG. 5B, when the transmissive optical part 14 rotates by the rotational angle ω, the light beam LG0 enters the side surface 14c1 at the incident angle equal to the rotational angle ω. Therefore, the light beam LG0 is refracted toward the direction (the +Z side) shown in the drawing, and then proceeds through the transmissive optical part 14. Then, the light beam LG0 also enters the side surface 14c3 at the predetermined incident angle, and is therefore refracted on the side surface 14c3, and is then emitted from the transmissive optical part 14. On this occasion, since the side surface 14c1 and the side surface 14c3 are parallel to each other, the incident angle of the light beam LG0 with respect to the side surface 14c1 and the incident angle of the light beam LG0 with respect to the side surface 14c3 are equal to each other, and the refraction angle of the light beam LG0 entering the side surface 14c1 and the refraction angle of the light beam LG0 emitted from the side surface 14c3 become equal in absolute value to each other and opposite in sign from each other. Thus, the refraction angle when the light beam LG0 enters the side surface 14c1 and the refraction angle when the light beam LG0 is emitted from the side surface 14c3 are canceled out. As a result, the light beam LG0 proceeds in parallel to the optical axis AX2 at a position displaced from the optical axis AX2 toward the +Z side as much as a displacement d.

Then, as shown in FIG. 5C, when the rotational angle ω of the transmissive optical part 14 becomes larger than that shown in FIG. 5B, the incident angle of the light beam LG0 becomes larger, and the refraction angle becomes larger. Therefore, the displacement d of the light beam LG0 from the optical axis AX2 becomes larger than that shown in FIG. 5B. Further, the state in which the light beam LG0 proceeds in parallel to the optical axis AX2 is always maintained. When the rotational angle ω is in a range from 0 degree to 45 degrees, the displacement d increases monotonically in accordance with an increase in the rotational angle ω.

Then, as shown in FIG. 5D, when the rotational angle ω of the transmissive optical part 14 exceeds 45 degrees, the plane of incidence of the light beam LG0 changes from the side surface 14c1 to the side surface 14c2. On this occasion, the light beam LG0 is refracted on the side surface 14c2, but is refracted toward the direction (the -Z side) shown in the drawing, which is different in refraction direction from the period shown in FIG. 5C and the antecedent drawings. Although the exit surface of the light beam LG0 also changes from the side surface 14c3 to the side surface 14c4, since the side surface 14c2 and the side surface 14c4 are parallel to each other, the relationship that the refraction angle when the light beam LG0 enters the side surface 14c3 and the refraction angle when the light beam LG0 is emitted from the side surface 14c4 are canceled out does not change from that in the period shown in FIG. 5C and the antecedent drawings. As a result, the light beam LG0 proceeds in parallel to the optical axis AX2 at a position displaced from the optical axis AX2 toward the -Z side as much as the displacement d.

Then, as shown in FIG. 5E, when the rotational angle ω of the transmissive optical part 14 becomes larger than that shown in FIG. 5D, the incident angle of the light beam LG0 becomes smaller, and the refraction angle becomes smaller. Therefore, the displacement d of the light beam LG0 from the optical axis AX2 becomes smaller than that shown in FIG. 5D. As described above, when the rotational angle ω is in a range from 45 degrees to 90 degrees, the displacement d decreases monotonically in accordance with an increase in the rotational angle ω.

Then, as shown in FIG. 5F, when the rotational angle ω of the transmissive optical part 14 becomes 90 degrees, the plane of incidence changes from the side surface 14c1 in the initial state to the side surface 14c2, but the behavior of the light beam LG0 becomes the same as that shown in FIG. 5A.

As described above, as long as the plane of incidence and the exit surface of the transmissive optical part 14 are parallel to each other, there is no chance for the proceeding direction of the light beam LG0 to change, and the light beam LG0 is translated in a direction parallel to the optical axis AX2 as time passes irrespective of the rotational angle ω of the transmissive optical part 14. When the rotational angle ω is 0 degree, the displacement d of the light beam LG0 is 0, and when the rotational angle ω is in a range from 0 degree to 45 degrees, the displacement d increases toward either one of the +Z side and the -Z side. At the moment when the rotational angle ω exceeds 45 degrees, the direction of the displacement is reversed while keeping the absolute value of the displacement d, and when the rotational angle ω is in the range from 45 degrees to 90 degrees, the displacement d decreases, and when the rotational angle ω becomes 90 degrees, the displacement d vanishes. The behavior described above is repeated after the rotational angle ω exceeds 90 degrees. Therefore, when the transmissive optical part 14 makes one revolution, the displacement d of the light beam LG0 repeats the cycle described above four times. The displacement of the light beam LG0 can arbitrarily be set by controlling parameters such as the refractive index and the size of the transmissive optical part 14.

The behavior of the light beam is hereinabove described focusing attention only on the light beam LG0 proceeding on the optical axis AX2, but in reality, as shown in FIG. 3, the green light beam LG linearly extends long in the Y-axis direction perpendicular to the Z-axis direction in which the green light beam LG is displaced. Therefore, scanning with the green light beam LG is performed in an illumination target area Q as a two-dimensional area on an illumination target surface (the light modulation device 21). The blue light beam LB and the red light beam LR are different in exit direction from the green light beam LG, but are respectively reflected by the reflecting elements 17, 18, and then, scanning with each of the blue light beam LB and the red light beam LR is performed in the illumination target area Q as the two-dimensional area on the illumination target surface (the light modulation device 21) similarly to the green light beam LG. As described above, the transmissive optical part 14 performs scanning with each of the blue light beam LB, the green light beam LG, and the red light beam LR in a direction perpendicular to the Y-axis direction when rotating centering on the rotational axis C1, to thereby scan the inside of the illumination target area Q as the two-dimensional area on the illumination target surface.

As shown in FIG. 1, the first reflecting element 17 is disposed on a light path of the blue light beam LB emitted from the first light source 11, between the first light source 11 and the transmissive optical part 14. The first reflecting element 17 is formed of a dichroic mirror which reflects red light while transmitting blue light. Therefore, the first reflecting element 17 reflects the red light beam LR emitted from the transmissive optical part 14, and transmits the blue light beam LB emitted from the first light source 11. An angle between the first reflecting element 17 and the Z axis is referred to as a tilt angle θ1 of the first reflecting element 17. The tilt angle θ1 of the first reflecting element 17 is larger than 45 degrees.

The second reflecting element 18 is disposed on a light path of the red light beam LR emitted from the third light source 13, between the third light source 13 and the transmissive optical part 14. The second reflecting element 18 is formed of a dichroic mirror which reflects blue light while transmitting red light. Therefore, the second reflecting element 18 reflects the blue light beam LB emitted from the transmissive optical part 14, and transmits the red light beam LR emitted from the third light source 13. An angle between the second reflecting element 18 and the Z axis is referred to as a tilt angle θ2 of the second reflecting element 18. The tilt angle θ2 of the second reflecting element 18 is larger than 45 degrees.

Since the tilt angle θ2 of the second reflecting element 18 is set larger than 45 degrees, the blue light LB reflected by the second reflecting element 18 proceeds obliquely to the optical axis AX2 so as to come closer to the optical axis AX2. Similarly, since the tilt angle θ1 of the first reflecting element 17 is set larger than 45 degrees, the red light LR reflected by the first reflecting element 17 proceeds obliquely to the optical axis AX2 so as to come closer to the optical axis AX2.

Thus, the blue light beam LB reflected by the second reflecting element 18, the green light beam LG emitted from the transmissive optical part 14, and the red light beam LR reflected by the first reflecting element 17 enter a microlens array 43 in an anterior stage of the light modulation device 21 from respective directions different from each other, and overlap each other on the first microlens array 43 as described later. In the case of the present embodiment, the incident angle of the green light beam LG to the first microlens array 43 is 0 degree. In other words, the green light beam LG perpendicularly enters the first microlens array 43. The incident angle of the blue light beam LB to the first microlens array 43 is α1. The incident angle of the red light beam LR to the first microlens array 43 is α2.

The light modulation device 21 is disposed at the light exit side of the light source device 10 on the optical axis AX2. The light modulation device 21 modulates each of the blue light beam LB, the green light beam LG, and the red light beam LR emitted from the light source device 10 in accordance with image information to form image light. As the light modulation device 21, there is used a transmissive liquid crystal panel. The liquid crystal panel is not provided with a color filter. As a drive system for the liquid crystal panel, there is used a twisted nematic (TN) system, a vertical alignment (VA) system, an in-plane switching (IPS) system, or the like, but the drive system is not particularly limited.

It is desirable to consider an installation position of the light modulation device 21 as follows.

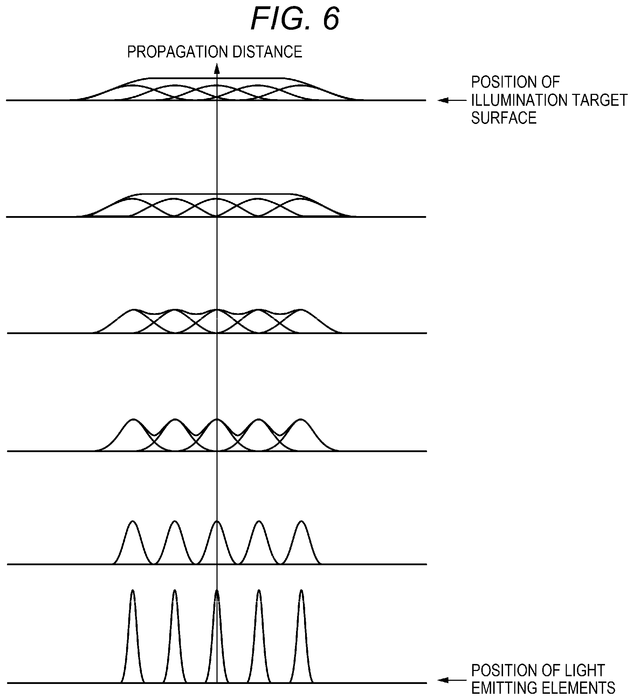

FIG. 6 is a schematic diagram showing a change in illuminance distribution when the light beams emitted from the five light emitting elements propagate as much as a predetermined distance. In FIG. 6, the horizontal axis represents the position of the light emitting element in a direction perpendicular to the propagation direction of a light beam, and the vertical axis represents a propagation distance.

As shown in FIG. 6, when the light beam emitted from each of the light emitting elements is an ideal Gaussian beam, when lighting the five light emitting elements arranged at regular intervals, the light beams emitted from the respective light emitting elements continue to diverge with a divergence angle, and the beam diameters gradually increase, and thus, the light beams overlap each other. Further, at the time point when the light beams emitted from the respective light emitting elements propagate as much as a predetermined distance, a composite illuminance distribution becomes a flat shape with vanishingly small unevenness. Therefore, it is desirable to set the distance from each of the light emitting elements to the illumination target surface, namely the distance from each of the light emitting elements to the light modulation device 21, so as to coincide with the distance with which the composite illuminance distribution consisting of the plurality of light beams becomes the flat shape. Thus, it is possible to obtain a homogenous illuminance distribution in the light modulation device 21.

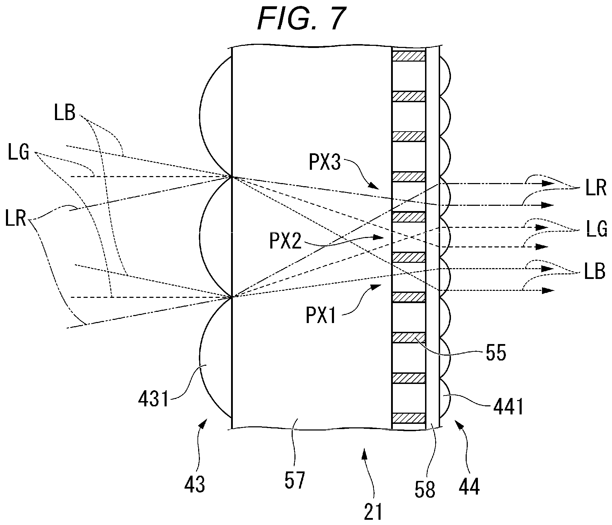

FIG. 7 is a cross-sectional view of the light modulation device 21.

As shown in FIG. 7, the liquid crystal panel constituting the light modulation device 21 has a light modulation area where a plurality of blue sub-pixels PX1, a plurality of green sub-pixels PX2, and a plurality of red sub-pixels PX3 are periodically arranged in a matrix. The blue sub-pixels PX1 modulate the blue light beam LB. The green sub-pixels PX2 modulate the green light beam LG. The red sub-pixels PX3 modulate the red light beam LR. A single pixel as a minimum unit of an image is constituted by a single blue sub-pixel PX1, a single green sub-pixel PX2, and a single red sub-pixel PX3. Between two sub-pixels adjacent to each other, there is disposed a light blocking film 55 which is referred to as a black matrix. The blue sub-pixel PX1 in the present embodiment corresponds to a first sub-pixel in the appended claims. The green sub-pixel PX2 in the present embodiment corresponds to a second sub-pixel in the appended claims. The red sub-pixel PX3 in the present embodiment corresponds to a third sub-pixel in the appended claims.

The first microlens array 43 is disposed at a light incidence side of a first substrate 57 constituting the liquid crystal panel. The first microlens array 43 has a configuration in which a plurality of first microlenses 431 is arranged in a matrix. The first microlens array 43 collects each of the blue light beam, the green light beam, and the red light beam to guide the blue light beam, the green light beam, and the red light beam respectively to the sub-pixels PX1, PX2, and PX3 of the light modulation device 21. Each of the first microlenses 431 is formed of a lenticular lens, and is arranged throughout each of the pixels, namely the three sub-pixels PX1, PX2, and PX3 different in color from each other and arranged in one direction. The lenticular lens is cited as the first microlenses 431 in the present embodiment, but this is not a limitation, and it is possible to adopt microlenses having rectangular lenses arranged in a bricklaying manner, microlenses having lenses arranged so as to correspond to the sub-pixels in a delta arrangement, a microlens array having a honeycomb structure, or the like.

As described above, the blue light beam LB, the green light beam LG, and the red light beam LR enter the first microlenses 431 at respective incident angles different from each other, and therefore, proceed toward respective directions different from each other, and are then converged. Thus, the blue light beam LB enters the blue sub-pixel PX1, the green light beam LG enters the green sub-pixel PX2, and the red light beam LR enters the red sub-pixel PX3. In other words, the first microlens array 43 makes the blue light beam LB emitted from the second reflecting element enter the blue sub-pixel PX1, makes the green light beam LG emitted from the transmissive optical part enter the green sub-pixel PX2, and makes the red light beam LR emitted from the first reflecting element enter the red sub-pixel PX3. The first microlens array 43 in the present embodiment corresponds to a light collecting element in the appended claims.

A second microlens array 44 is disposed at a light exit side of a second substrate 58 constituting the liquid crystal panel. The second microlens array 44 has a configuration in which a plurality of second microlenses 441 is arranged in a matrix. The second microlens array 44 collimates the colored light beams emitted from the liquid crystal panel. The second microlens 441 is disposed for each of the sub-pixels. It should be noted that there is cited an example of performing the collimation of each of the colored light beams after the colored light beam is emitted from the liquid crystal panel in the present embodiment, but it is possible to adopt a configuration in which the second microlens array 44 is arranged at the light incidence side of the liquid crystal panel to perform the collimation of each of the colored light beams before the colored light beam enters the liquid crystal panel instead of this configuration.

As shown in FIG. 1, the exit side polarization plate 22 is disposed between the light modulation device 21 and the projection optical device 23 on the optical axis AX2. The exit side polarization plate 22 transmits the linearly-polarized light beam in a specific direction, which is emitted from the light modulation device 21, toward the projection optical device 23. In the case of the present embodiment, since the laser diode is used in each of the light emitting elements, a linearly-polarized light beam is emitted from the light source device 10. Therefore, the incidence side polarization plate disposed at the light incidence side of the light modulation device 21 is unnecessary. Obviously, it is possible to dispose the incidence side polarization plate achieving an increase in contrast.

The projection optical device 23 is constituted by a plurality of lenses. The projection optical device 23 projects the image light having been modulated by the light modulation device 21 toward the projection target surface such as a screen in an enlarged manner. Thus, the image is displayed on the projection target surface.

### Advantages of First Embodiment

The light source device 10 according to the present embodiment is provided with the first light source 11 for emitting the blue light beam LB, the second light source 12 for emitting the green light beam LG, the third light source 13 for emitting the red light beam LR, and the transmissive optical part 14 which is formed of the light transmissive member rotatably supported, and which transmits the colored light beams LB, LG, and LR. The transmissive optical part 14 is made rotatable centering on the rotational axis C1 extending along the Y-axis direction. The cross-sectional shape perpendicular to the principal ray of each of the blue light beam LB emitted from the first light source 11, the green light beam LG emitted from the second light source 12, and the red light beam LR emitted from the third light source 13 is the shape having the long axis extending along the Y-axis direction. The blue light beam LB enters the transmissive optical part 14 at the first position P1. The green light beam LG enters the transmissive optical part 14 at the second position P2. The red light beam LR enters the transmissive optical part 14 at the third position P3. In the transmissive optical part 14, the plane of incidence which each of the blue light beam LB, the green light beam LG, and the red light beam LR enters, and the exit surface from which corresponding one of the blue light beam LB, the green light beam LG, and the red light beam LR entering the transmissive optical part 14 from that plane of incidence is emitted are parallel to each other.

The projector 20 according to the present embodiment is provided with the light source device 10, the light modulation device 21 for modulating the blue light beam LB, the green light beam LG, and the red light beam LR emitted from the transmissive optical part 14 of the light source device 10 in accordance with the image information, and the projection optical device 23 for projecting the light modulated by the light modulation device 21.

When using the polygon mirror as a device for performing scanning with light beam as in the related-art light source device, since the polygon mirror reflects the light beam while rotating, the incident angle of the light beam entering the illumination target surface changes from moment to moment with time. Therefore, even when the light beam to be made to enter the polygon mirror is a parallel light beam, the light beam emitted from the polygon mirror becomes a diverging light beam, and therefore, it is extremely difficult to make the light beam always perpendicularly enter the illumination target surface. Therefore, in the related-art projector provided with the polygon mirror, there is a possibility that the degradation of the brightness and the contrast and occurrence of the color unevenness in the light modulation device, a light loss in the projection optical device, and so on occur to degrade the image quality of the projector.

To cope with the problem described above, according to the light source device 10 related to the present embodiment, as shown in FIG. 5A through FIG. 5F, each of the blue light beam LB, the green light beam LG, and the red light beam LR is displaced in a direction perpendicular to the proceeding direction of corresponding one of the colored light beams LB, LG, and LR while keeping the state in which the colored light beams LB, LG, and LR are parallel to the corresponding optical axes AX1, AX2, and AX3 with the rotation of the transmissive optical part 14. Further, since each of the colored light beams LB, LG, and LR has an elongated shape having the long axis along the extending direction of the rotational axis C1, it is possible to perform the scanning with each of the colored light beams LB, LG, and LR in the illumination target area Q as the two-dimensional area on an arbitrary illumination target surface, specifically, in the light modulation area of the light modulation device 21. Thus, the degradation of the brightness and the contrast, and the occurrence of the color unevenness in the light modulation device 21, the light loss in the projection optical device 23, and so on are suppressed, and it is possible to realize the projector 20 excellent in display quality with a simple configuration.

The projector 20 according to the present embodiment is further provided with the first reflecting element 17 for reflecting the red light beam LR emitted from the transmissive optical part 14, the second reflecting element 18 for reflecting the blue light beam LB emitted from the transmissive optical part 14, and the first microlens array 43 which collects each of the blue light beam LB reflected by the second reflecting element 18, the green light beam LG emitted from the transmissive optical part 14, and the red light beam LR reflected by the first reflecting element 17 to guide the colored light beams to the light modulation device 21. The blue light beam LB reflected by the second reflecting element 18, the green light beam LG emitted from the transmissive optical part 14, and the red light beam LR reflected by the first reflecting element 17 enter the first microlens array 43 from respective directions different from each other. The light modulation device 21 has the blue sub-pixels PX1 for modulating the blue light beam LB, the green sub-pixels PX2 for modulating the green light beam LG, and the red sub-pixels PX3 for modulating the red light beam LR. The first microlens array 43 makes the blue light beam LB emitted from the second reflecting element 18 enter the blue sub-pixels PX1, makes the green light beam LG emitted from the transmissive optical part 14 enter the green sub-pixels PX2, and makes the red light beam LR emitted from the first reflecting element 17 enter the red sub-pixels PX3.

The projector 20 according to the present embodiment is provided with three light emitting elements 25, 26, and 27 different in emission color from each other, and due to the layout of the reflecting elements 17, 18 and the operation of the first microlens array 43, it is possible to spatially separate the three colored light beams LB, LG, and LR from each other to make the three colored light beams LB, LG, and LR enter the corresponding sub-pixels PX1, PX2, and PX3. Thus, it is possible to realize the projector 20 capable of displaying a color image without using a color filter in the light modulation device 21. Further, since it is possible to illuminate the light modulation device 21 as a two-dimensional device by performing scanning in the Z-axis direction with the colored light beams LB, LG, and LR each having the long axis in the Y-axis direction, just one transmissive optical part becomes enough, and it is possible to achieve simplification and a reduction is size of the device configuration.

The projector of this kind is designed on the assumption that the incident angle of each of the colored light beams to the first microlens array is always constant. However, when using the polygon mirror as a device for performing scanning with light beam as in the related-art light source device, since the polygon mirror reflects the light beam while rotating, the incident angle of each of the colored light beams entering the first microlens array via corresponding one of the reflecting elements changes with time. In this case, there is a possibility that there occurs a problem that the chromatic purity of the display image is degraded by a specific colored light beam entering an adjacent sub-pixel not corresponding to that colored light beam. Further, there is a possibility that there occurs a problem that the light entering the black matrix of the liquid crystal panel increases to decrease the luminance of the display image.

To cope with the problems described above, according to the projector 20 related to the present embodiment, since each of the colored light beams LB, LG, and LR emitted from the transmissive optical part 14 becomes a substantially parallel light beam, a temporal variation in incident angle of each of the colored light beams LB, LG, and LR to the first microlens array 43 is extremely small. Therefore, since the proportion of the specific colored light beam which enters the adjacent sub-pixel not corresponding to that colored beam of the black matrix decreases, it is possible to prevent the deterioration of the chromatic purity and the luminance of the display image.

Further, even when each of the colored light beams LB, LG, and LR is a laser beam having the coherency, scanning with each of the colored light beams LB, LG, and LR is performed two-dimensionally at high speed on the light modulation device 21, and thus, each of the colored light beams LB, LG, and LR is temporally superimposed. Thus, it is possible to prevent the illuminance unevenness caused by using the light source having the coherency.

Further, according to the present embodiment, it is possible to illuminate a substantially rectangular shape without using an optical system for forming light to have a rectangular shape such as a multi-lens. Therefore, since it is possible to make the whole light path length relatively short, and at the same time, it is possible to reduce the optical components to thereby decrease the number of interfaces between the optical system and the air, and therefore, it is possible to reduce the light loss caused by the interfacial reflection.

Since the light source device 10 according to the present embodiment is a scanning type illumination device, it is possible to put the light emitting elements 25, 26, and 27 off when the colored light beams reach the area where black is intended to be displayed in the light modulation area. Thus, the method of illuminating only the area other than the black display, a so-called area illumination, becomes possible, and it is possible to sufficiently increase the efficiency of the exit light intensity to the input power compared to a conventional non-scanning type illumination method. In association with the above, since the light absorbed by the exit side polarization plate 22 when performing the black display decreases, it is possible to reduce the burden on the exit side polarization plate 22. Thus, it is possible to expect an advantage such as an increase in reliability of the exit side polarization plate 22, or an increase in contrast due to adoption of a polarization plate made of an organic material.

### Second Embodiment

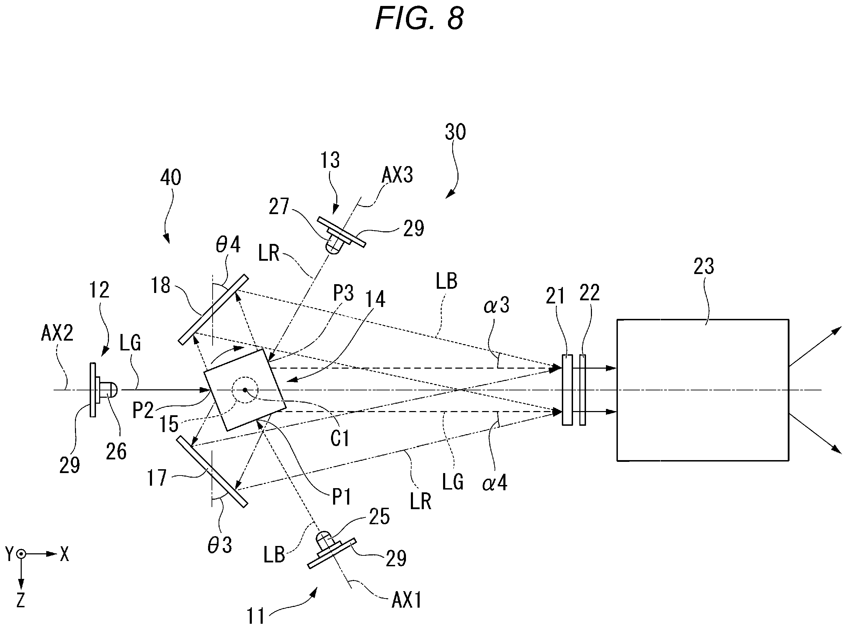

A second embodiment of the present disclosure will hereinafter be described using FIG. 8.

A projector according to the present embodiment is substantially the same in basic configuration as that of the first embodiment, but is different in arrangement of some light sources from that of the first embodiment.

FIG. 8 is a schematic configuration diagram of the projector 30 according to the present embodiment.

In FIG. 8, the constituents common to the drawing in the first embodiment are denoted by the same reference symbols, and the description thereof will be omitted.

As shown in FIG. 8, the projector 30 according to the present embodiment is provided with a light source device 40, the light modulation device 21, the exit side polarization plate 22, and the projection optical device 23.

The light source device 40 according to the present embodiment is provided with the first light source 11, the second light source 12, the third light source 13, the transmissive optical part 14, the rotary drive device 15, the first reflecting element 17, and the second reflecting element 18.

In the first embodiment, each of the optical axis AX1 of the first light source 11 and the optical axis AX3 of the third light source 13 is perpendicular to the optical axis AX2 of the second light source 12. In contrast, in the present embodiment, the first light source 11 is arranged at a position where the first light source 11 has rotated counterclockwise from a position where the optical axis AX1 is perpendicular to the optical axis AX2. The third light source 13 is arranged at a position where the third light source 13 has rotated clockwise from a position where the optical axis AX3 is perpendicular to the optical axis AX2.

In the present embodiment, as described above, since the position of the first light source 11 changes from the position in the first embodiment, the first reflecting element 17 is located at a place out of the light path of the blue light beam LB emitted from the first light source 11. In this case, the first reflecting element 17 can be formed of a dichroic mirror which reflects red light and transmits blue light similarly to the first embodiment, or can also be formed of a mirror which reflects light having entered the mirror irrespective of the wavelength band. Further, since the position of the third light source 13 changes from the position in the first embodiment, the second reflecting element 18 is located at a place out of the light path of the red light beam LR emitted from the third light source 13. In this case, the second reflecting element 18 can be formed of a dichroic mirror which reflects blue light and transmits red light similarly to the first embodiment, or can also be formed of a mirror which reflects light having entered the mirror irrespective of the wavelength band.

The tilt angle θ3 of the first reflecting element 17 is larger than 45 degrees, and is smaller than the tilt angle θ1 of the first reflecting element 17 in the first embodiment. The tilt angle θ4 of the second reflecting element 18 is larger than 45 degrees, and is smaller than the tilt angle θ2 of the second reflecting element 18 in the first embodiment.

The rest of the configuration of the projector 30 is substantially the same as in the first embodiment.

### Advantages of Second Embodiment

In the present embodiment, there can be obtained substantially the same advantages as those of the first embodiment such as an advantage that it is possible to solve the problem of the deterioration of the brightness and the contrast in the light modulation device 21, the occurrence of the color unevenness, the light loss in the projection optical device 23, and the illuminance unevenness caused by using the light source having the coherency, an advantage that it is possible to decrease the number of the interfaces between the optical system and the air, and thus, it is possible to reduce the light loss caused by the interfacial reflection, an advantage that it is possible to increase the light use efficiency without using the optical system for forming the light into a rectangular shape, an advantage that the area illumination becomes possible, and an advantage that it is possible to perform the color display with a simple configuration without using a color filter, and thus, it is possible to prevent the degradation of the chromatic purity and the luminance of the display image.

In the projector of a system in which the colored light beams are assigned to the corresponding sub-pixels by the microlenses arranged in a posterior stage of the light modulation device, in order to improve the quality of the display image, it is important to accurately adjust the incident angles of the respective colored light beams to the microlenses. Further, due to a factor such as a process limitation of the microlenses, it is difficult to freely set the incident angles of the respective colored light beams in some cases. To cope with these problems, in the case of the present embodiment, as described above, since the arrangement of the first light source 11 and the third light source 13 and the tilt angles θ3, θ4 of the respective reflecting elements 17, 18 are changed from those in the first embodiment, it is possible to make the incident angle α3 of the blue light beam LB to the first microlens array 43 smaller than the incident angle α1 of the blue light beam LB in the first embodiment. Further, it is possible to make the incident angle α4 of the red light beam LR to the first microlens array 43 smaller than the incident angle α2 of the red light beam LR in the first embodiment. As described above, the configuration of the present embodiment is suitable to when the incident angle of the colored light beam which is made to obliquely enter the first microlens array 43 is intended to be made relatively smaller.

It should be noted that it is possible to decrease the incident angles of the blue light beam LB and the red light beam LR to the first microlens array 43 by making the tilt angles θ1, θ2 of the respective reflecting elements 17, 18 smaller than in the first embodiment, and making the distances between the light modulation device 21 and the respective reflecting elements 17, 18 longer while keeping the layout of the first light source 11 and the third light source 13 the same as in the first embodiment instead of the configuration of the present embodiment. In this case, even when the actual distance from each of the light emitting elements 25, 26, and 27 to the light modulation device 21 becomes longer than the shortest distance which makes the illuminance distribution have a flat shape, it is possible to obtain a top-flat illuminance distribution.

### Third Embodiment

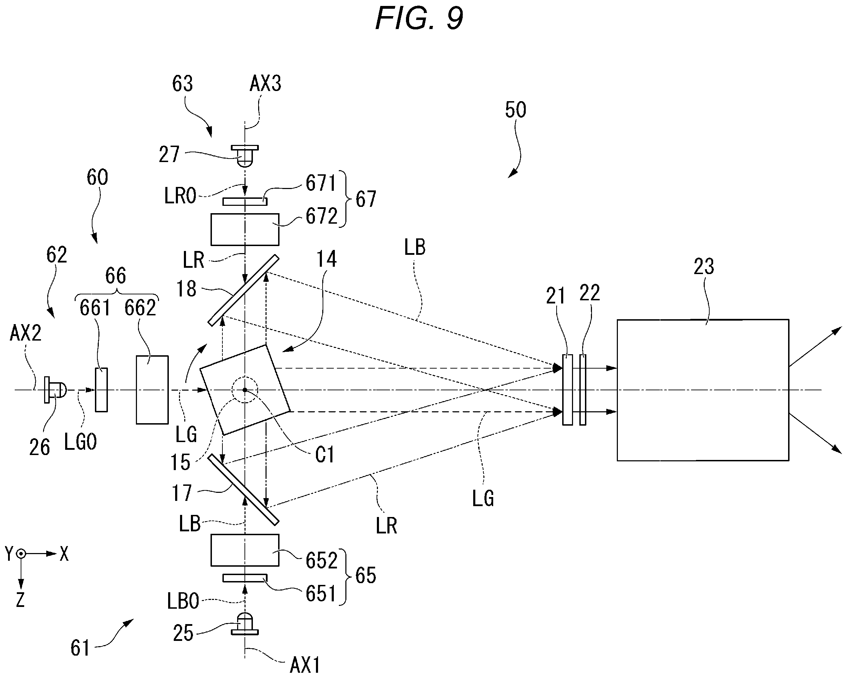

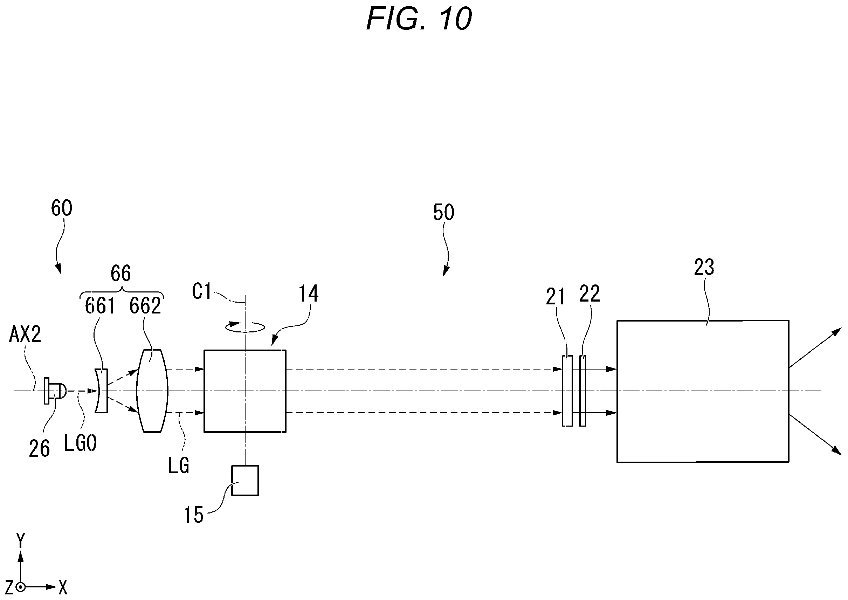

A third embodiment of the present disclosure will hereinafter be described using FIG. 9 and FIG. 10.

A projector according to the present embodiment is substantially the same in basic configuration as that of the first embodiment, but is different in configuration of the light sources from that of the first embodiment.

FIG. 9 is a plan view showing a schematic configuration of the projector 50 according to the present embodiment. FIG. 10 is a side view showing a schematic configuration of the projector 50 according to the present embodiment.

In FIG. 9 and FIG. 10, the constituents common to the drawings in the first embodiment are denoted by the same reference symbols, and the description thereof will be omitted.

As shown in FIG. 9 and FIG. 10, the projector 50 according to the present embodiment is provided with a light source device 60, the light modulation device 21, the exit side polarization plate 22, and the projection optical device 23.

The light source device 60 according to the present embodiment is provided with a first light source 61, a second light source 62, a third light source 63, the transmissive optical part 14, the rotary drive device 15, the first reflecting element 17, and the second reflecting element 18.

The second light source 62 is provided with a single second light emitting element 26 and a second flux width adjustment optical system 66. The second flux width adjustment optical system 66 is constituted by a cylindrical concave lens 661 and a cylindrical convex lens 662. The cylindrical concave lens 661 does not have power in the Z-axis direction, but has negative power in the Y-axis direction. The cylindrical convex lens 662 does not have power in the Z-axis direction, but has positive power in the Y-axis direction. Thus, the second flux width adjustment optical system 66 enlarges the flux width in the Y-axis direction of the green light beam LG0 emitted from the second light emitting element 26.

The configuration of each of the first light source 61 and the third light source 63 is substantially the same as the configuration of the second light source 62. Specifically, the first light source 61 is provided with a single first light emitting element 25 and a first flux width adjustment optical system 65. The first flux width adjustment optical system 65 is constituted by a cylindrical concave lens 651 and a cylindrical convex lens 652. The third light source 63 is provided with a single third light emitting element 27 and a third flux width adjustment optical system 67. The third flux width adjustment optical system 67 is constituted by a cylindrical concave lens 671 and a cylindrical convex lens 672. The colored light beams LB, LG, and LR emitted from the respective flux width adjustment optical systems 65, 66, and 67 are each a parallel light beam with the flux width in the Y-axis direction enlarged. In other words, each of the first flux width adjustment optical system 65, the second flux width adjustment optical system 66, and the third flux width adjustment optical system 67 is an afocal optical system including a cylindrical lens.

The rest of the configuration of the projector 50 is substantially the same as in the first embodiment.

### Advantages of Third Embodiment

In the present embodiment, there can be obtained substantially the same advantages as those of the first embodiment such as an advantage that it is possible to solve the problem of the deterioration of the brightness and the contrast in the light modulation device 21, the occurrence of the color unevenness, the light loss in the projection optical device 23, and the illuminance unevenness caused by using the light source having the coherency, an advantage that it is possible to decrease the number of the interfaces between the optical system and the air by reducing the optical components, and thus, it is possible to reduce the light loss caused by the interfacial reflection, an advantage that it is possible to increase the light use efficiency without using the optical system for forming the light into a rectangular shape, an advantage that the area illumination becomes possible, and an advantage that it is possible to perform the color display with a simple configuration without using a color filter, and thus, it is possible to prevent the degradation of the chromatic purity and the luminance of the display image.

In the case of the present embodiment, since the first light source 61, the second light source 62, and the third light source 63 are respectively provided with the flux width adjustment optical systems 65, 66, and 67, by appropriately setting the power in the Y-axis direction of each of the flux width adjustment optical systems 65, 66, and 67, it is possible to adjust the flux width in the Y-axis direction of each of the colored light beams LB, LG, and LR in accordance with the size of the light modulation device 21 irrespective of the number of the light emitting elements. Further, since the flux width adjustment optical systems 65, 66, and 67 are each an afocal optical system, it is possible to freely set the installation position in the X-axis direction of the light modulation device 21.

### Fourth Embodiment

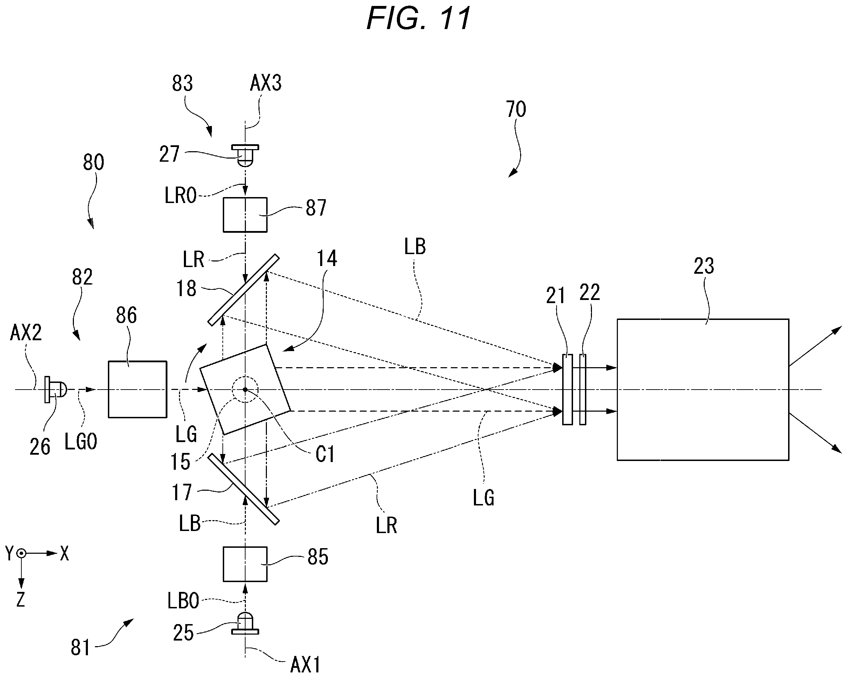

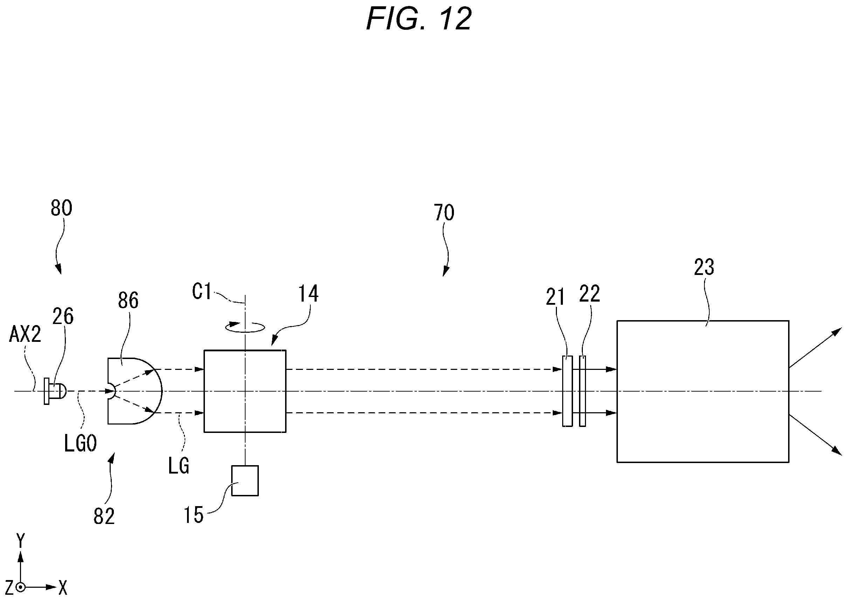

A fourth embodiment of the present disclosure will hereinafter be described using FIG. 11 and FIG. 12.

A projector according to the present embodiment is substantially the same in basic configuration as that of the third embodiment, but is different in configuration of the flux width adjustment optical systems from that of the third embodiment.

FIG. 11 is a plan view showing a schematic configuration of a projector 70. FIG. 12 is a side view showing a schematic configuration of the projector 70.

In FIG. 11 and FIG. 12, the constituents common to the drawings in the first embodiment are denoted by the same reference symbols, and the description thereof will be omitted.

As shown in FIG. 11 and FIG. 12, the projector 70 according to the present embodiment is provided with a light source device 80, the light modulation device 21, the exit side polarization plate 22, and the projection optical device 23.

The light source device 80 according to the present embodiment is provided with a first light source 81, a second light source 82, a third light source 83, the transmissive optical part 14, the rotary drive device 15, the first reflecting element 17, and the second reflecting element 18.

The second light source 82 is provided with a single second light emitting element 26 and a second flux width adjustment optical system 86. The second flux width adjustment optical system 86 is formed of a single meniscus lens. The meniscus lens has a concave surface at the light incidence side, and a convex surface at the light exit side. The meniscus lens does not have power in the Z-axis direction, but has power in the Y-axis direction. Thus, the second flux width adjustment optical system 86 enlarges the flux width in the Y-axis direction of the green light beam LG0 emitted from the second light emitting element 26. Further, the green light beam LG emitted from the second flux width adjustment optical systems 86 is a parallel light beam with the flux width in the Y-axis direction enlarged.

The configuration of each of the first light source 81 and the third light source 83 is substantially the same as the configuration of the second light source 82. Specifically, the first light source 81 is provided with a single first light emitting element 25 and a first flux width adjustment optical system 85. The first flux width adjustment optical system 85 is formed of a single meniscus lens. The third light source 83 is provided with a single third light emitting element 27 and a third flux width adjustment optical system 87. The third flux width adjustment optical system 87 is formed of a single meniscus lens.

The rest of the configuration of the projector 70 is substantially the same as in the first embodiment.

### Advantages of Fourth Embodiment

In the present embodiment, there can be obtained substantially the same advantages as those of the first embodiment such as an advantage that it is possible to solve the problem of the deterioration of the brightness and the contrast in the light modulation device 21, the occurrence of the color unevenness, the light loss in the projection optical device 23, and the illuminance unevenness caused by using the light source having the coherency, an advantage that it is possible to decrease the number of the interfaces between the optical system and the air by reducing the optical components, and thus, it is possible to reduce the light loss caused by the interfacial reflection, an advantage that it is possible to increase the light use efficiency without using the optical system for forming the light into a rectangular shape, an advantage that the area illumination becomes possible, and an advantage that it is possible to perform the color display with a simple configuration without using a color filter, and thus, it is possible to prevent the degradation of the chromatic purity and the luminance of the display image.

Further, due to the flux width adjustment optical systems 85, 86, and 87, it is possible to obtain substantially the same advantages as those of the third embodiment such as an advantage that it is possible to adjust the flux width in the Y-axis direction of each of the colored light beams LB, LG, and LR in accordance with the size of the light modulation device 21 irrespective of the number of the light emitting elements, and an advantage that it is possible to freely set the installation position in the X-axis direction of the light modulation device 21.

### Fifth Embodiment

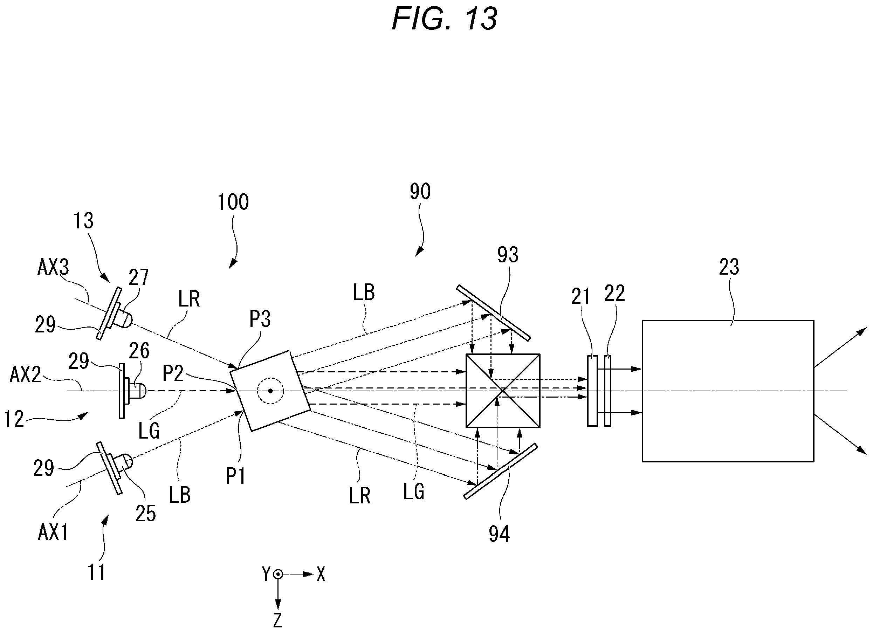

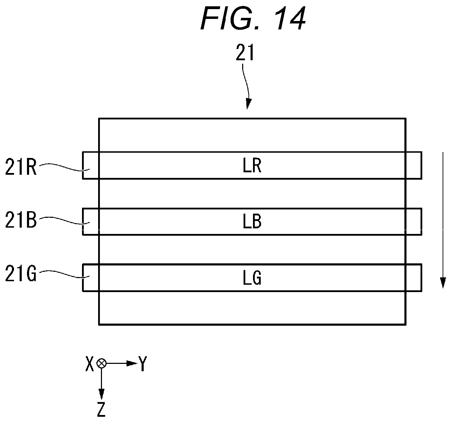

Hereinafter, a fifth embodiment of the present disclosure will be described using FIG. 13 and FIG. 14.

A projector according to the present embodiment is substantially the same in basic configuration as that of the first embodiment, but is different in configuration of the light source device from that of the third embodiment.

FIG. 13 is a plan view showing a schematic configuration of the projector 90 according to the present embodiment.

In FIG. 13, the constituents common to the drawing in the first embodiment are denoted by the same reference symbols, and the description thereof will be omitted.

As shown in FIG. 13, the projector 90 according to the present embodiment is provided with a light source device 100, the light modulation device 21, the exit side polarization plate 22, and the projection optical device 23.

The light source device 100 according to the present embodiment is provided with the first light source 11, the second light source 12, the third light source 13, the transmissive optical part 14, the rotary drive device 15, a light combining element 91, a third reflecting element 93, and a fourth reflecting element 94.

In the case of the present embodiment, each of the blue light beam LB emitted from the first light source 11, the green light beam LG emitted from the second light source 12, and the red light beam LR emitted from the third light source 13 directly enters the transmissive optical part 14 without an intervention of a reflecting element or the like. The first light source 11 is arranged at a position which rotates counterclockwise from the position of the second light source 12, and is tilted toward the +Z side with respect to the optical axis AX2. The third light source 13 is arranged at a position which rotates clockwise from the position of the second light source 12, and is tilted toward the -Z side with respect to the optical axis AX2.

Since the light sources 11, 12, and 13 are arranged as described above, the blue light beam LB, the green light beam LG, and the red light beam LR enter the transmissive optical part 14 at respective positions different from each other. Specifically, the blue light beam LB enters the transmissive optical part 14 at a first position P1. The green light beam LG enters the transmissive optical part 14 at a second position P2 different from the first position P1. The red light beam LG enters the transmissive optical part 14 at a third position P3 different from the first position P1 and the second position P2.

The light combining element 91 is disposed between the transmissive optical part 14 and the light modulation device 21 on the optical axis AX2. The light combining element 91 has a configuration in which a dichroic film for transmitting green light and red light and reflecting blue light, and a dichroic film for transmitting green light and blue light and reflecting red light cross each other to form an X shape. The light combining element 91 combines the blue light beam LB emitted from the transmissive optical part 14, the green light beam LG emitted from the transmissive optical part 14, and the red light beam LR emitted from the transmissive optical part 14 with each other. The blue light beam LB, the green light beam LG, and the red light beam LR combined with each other by the light combining element 91 each perpendicularly enter the light modulation device 21.

The third reflecting element 93 reflects the blue light beam LB, which is emitted from the transmissive optical part 14, toward the light combining element 91. The fourth reflecting element 94 reflects the red light beam LR, which is emitted from the transmissive optical part 14, toward the light combining element 91. It is desirable for the third reflecting element 93 and the fourth reflecting element 94 to be set in angle so that the blue light beam LB and the red light beam LR each perpendicularly enter the light combining element 91.

FIG. 14 is a schematic diagram showing how scanning with the three colored light beams is performed on the light modulation device 21.

As described above, the blue light beam LB, the green light beam LG, and the red light beam LR enter the transmissive optical part 14 at respective positions P1, P2, and P3 different from each other, and are therefore emitted from the transmissive optical part 14 with respective phases different from each other. As a result, there is no chance for the blue light beam LB, the green light beam LG, and the red light beam LR to overlap each other in the same area when illuminating the light modulation device 21, and as shown in FIG. 14, scanning with the blue light beam LB, the green light beam LG, and the red light beam LR is performed in the Z-axis direction according to time while illuminating the strip-shaped areas extending in the Y-axis direction at intervals.

As described above, the blue light beam LB forms a first illumination target area 21B shaped like a strip having a long axis in the Y-axis direction on the light modulation device 21. The green light beam LG forms a second illumination target area 21G shaped like a strip having a long axis in the Y-axis direction on the light modulation device 21. The red light beam LR forms a third illumination target area 21R shaped like a strip having a long axis in the Y-axis direction on the light modulation device 21. Each of the first illumination target area 21B, the second illumination target area 21G, and the third illumination target area 21R is scanned in the Z-axis direction on the light modulation device 21 with the rotation of the transmissive optical part 14.

A controller (not shown) vertically scans a blue partial image, a green partial image, and a red partial image obtained by dividing the whole image into strips in sync with the scanning of the first illumination target area 21B, the second illumination target area 21G, and the third illumination target area 21R. Thus, the light modulation device 21 performs the modulation of the colored light beams LB, LG, and LR different by the illumination target areas 21B, 21G, and 21R. Specifically, the light modulation device 21 performs the modulation of the blue light beam LB in the first illumination target area 21B, performs the modulation of the green light beam LG in the second illumination target area 21G, and performs the modulation of the red light beam LR in the third illumination target area 21R, and by scanning the illumination target areas 21B, 21G, and 21R in the Z-axis direction, a full-color image is formed.

The rest of the configuration of the projector 90 is substantially the same as in the first embodiment.

### Advantages of Fifth Embodiment

In the present embodiment, there can be obtained substantially the same advantages as those of the first embodiment such as an advantage that it is possible to solve the problem of the deterioration of the brightness and the contrast in the light modulation device 21, the occurrence of the color unevenness, the light loss in the projection optical device 23, and the illuminance unevenness caused by using the light source having the coherency, an advantage that it is possible to decrease the number of the interfaces between the optical system and the air by reducing the optical components, and thus, it is possible to reduce the light loss caused by the interfacial reflection, an advantage that it is possible to increase the light use efficiency without using the optical system for forming the light into a rectangular shape, an advantage that the area illumination becomes possible, and an advantage that it is possible to perform the color display with a simple configuration without using a color filter, and thus, it is possible to prevent the degradation of the chromatic purity and the luminance of the display image.

In the case of the present embodiment, unlike the embodiments previously described, since there is not adopted the projector of the system in which the three colored light beams are made to enter the single microlens from the respective directions different from each other to thereby spatially separate the three colored light beams from each other, it is possible to make all of the colored light beams LB, LG, and LR perpendicularly enter the light modulation device 21. In this case, according to the present embodiment, the state in which the blue light beam LB, the green light beam LG, and the red light beam LR each perpendicularly enter the light modulation device 21 is always maintained. Thus, it is possible to stably obtain an image excellent in display quality such as contrast or color reproducibility.

### Sixth Embodiment

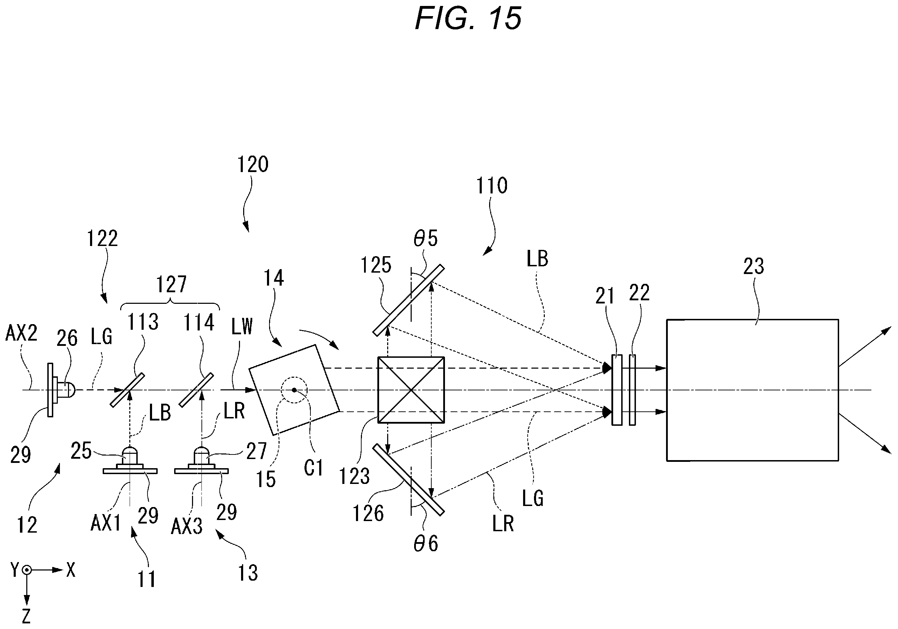

A sixth embodiment of the present disclosure will hereinafter be described using FIG. 15.

A projector according to the present embodiment is substantially the same in basic configuration as that of the first embodiment, but is different in configuration of the light source device from that of the first embodiment.

FIG. 15 is a plan view showing a schematic configuration of the projector 110 according to the present embodiment.

In FIG. 15, the constituents common to the drawing in the first embodiment are denoted by the same reference symbols, and the description thereof will be omitted.

As shown in FIG. 15, the projector 110 according to the present embodiment is provided with a light source device 120, the light modulation device 21, the exit side polarization plate 22, and the projection optical device 23.

The light source device 120 according to the present embodiment is provided with a light source 122, the transmissive optical part 14, the rotary drive device 15, a light separation element 123, a fifth reflecting element 125, and a sixth reflecting element 126. The light source 122 is provided with the first light source 11, the second light source 12, the third light source 13, and a light combining optical system 127.

The first light source 11 is arranged in a posture in which the optical axis AX1 of the first light source 11 is perpendicular to the optical axis AX2 of the second light source 12. The third light source 13 is arranged in a posture in which the optical axis AX3 of the third light source 13 is perpendicular to the optical axis AX2 of the second light source 12. The first light source 11 emits the blue light beam LB toward the -Z side. The third light source 13 emits the red light beam LR toward the -Z side. The second light source 12 emits the green light beam LG toward the +X side. The first light source 11 is arranged at a side near to the second light source 12, and the third light source 13 is arranged at a side far from the second light source 12 in this example, but this arrangement can be reversed.

The light combining optical system 127 is provided with a first light combining element 113 and a second light combining element 114. The first light combining element 113 is disposed at a position where the optical axis AX1 and the optical axis AX2 cross each other. The first light combining element 113 is formed of a dichroic mirror which transmits green light, and reflects blue light. The second light combining element 114 is disposed at a position where the optical axis AX2 and the optical axis AX3 cross each other. The second light combining element 114 is formed of a dichroic mirror which transmits green light and blue light, and reflects red light. The light combining optical system 127 combines the blue light beam LB emitted from the first light source 11, the green light beam LG emitted from the second light source 12, and the red light beam LR emitted from the third light source 13 with each other to generate a white light beam LW. Thus, the light source 122 emits the white light beam LW. The white light beam LW enters the transmissive optical part 14 without being separated according to the wavelength band.

The light separation element 123 is disposed between the transmissive optical part 14 and the light modulation device 21 on the optical axis AX2. The light separation element 123 has a configuration in which a dichroic film for transmitting green light and red light and reflecting blue light, and a dichroic film for transmitting green light and blue light and reflecting red light cross each other to form an X shape. The light separation element 123 separates the white light beam LW having been emitted from the transmissive optical part 14 into the blue light beam LB, the green light beam LG, and the red light beam LR. The blue light beam LB is emitted from the transmissive optical part 14 toward the -Z side. The red light beam LR is emitted from the transmissive optical part 14 toward the +Z side. The green light beam LG is emitted from the transmissive optical part 14 toward the +X side, and then enters the light modulation device 21.

The fifth reflecting element 125 is disposed on the light path of the blue light beam LB emitted from the transmissive optical part 14 toward the -Z side. The fifth reflecting element 125 reflects the blue light beam LB emitted from the transmissive optical part 14 toward the -Z side to make the blue light beam LB thus reflected enter the light modulation device 21. The sixth reflecting element 126 is disposed on the light path of the red light beam LR emitted from the transmissive optical part 14 toward the +Z side. The sixth reflecting element 126 reflects the red light beam LR emitted from the transmissive optical part 14 toward the +Z side to make the red light beam LR thus reflected enter the light modulation device 21. The tilt angle θ5 of the fifth reflecting element 125 and the tilt angle θ6 of the sixth reflecting element 126 are both set larger than 45 degrees.

The blue light beam LB reflected by the fifth reflecting element 125 proceeds obliquely to the optical axis AX2 so as to approach the optical axis AX2. The red light beam LR reflected by the sixth reflecting element 126 proceeds obliquely to the optical axis AX2 so as to approach the optical axis AX2. Thus, the blue light beam LB reflected by the fifth reflecting element 125, the green light beam LG emitted from the transmissive optical part 14, and the red light beam LR reflected by the sixth reflecting element 126 enter the first microlens array 43 (see FIG. 7) in the anterior stage of the light modulation device 21 from respective directions different from each other, and overlap each other on the first microlens array 43.

The rest of the configuration of the projector 110 is substantially the same as in the first embodiment.

### Advantages of Sixth Embodiment

In the present embodiment, there can be obtained substantially the same advantages as those of the first embodiment such as an advantage that it is possible to solve the problem of the deterioration of the brightness and the contrast in the light modulation device 21, the occurrence of the color unevenness, the light loss in the projection optical device 23, and the illuminance unevenness caused by using the light source having the coherency, an advantage that it is possible to decrease the number of the interfaces between the optical system and the air by reducing the optical components, and thus, it is possible to reduce the light loss caused by the interfacial reflection, an advantage that it is possible to increase the light use efficiency without using the optical system for forming the light into a rectangular shape, an advantage that the area illumination becomes possible, and an advantage that it is possible to perform the color display with a simple configuration without using a color filter, and thus, it is possible to prevent the degradation of the chromatic purity and the luminance of the display image.

### Seventh Embodiment

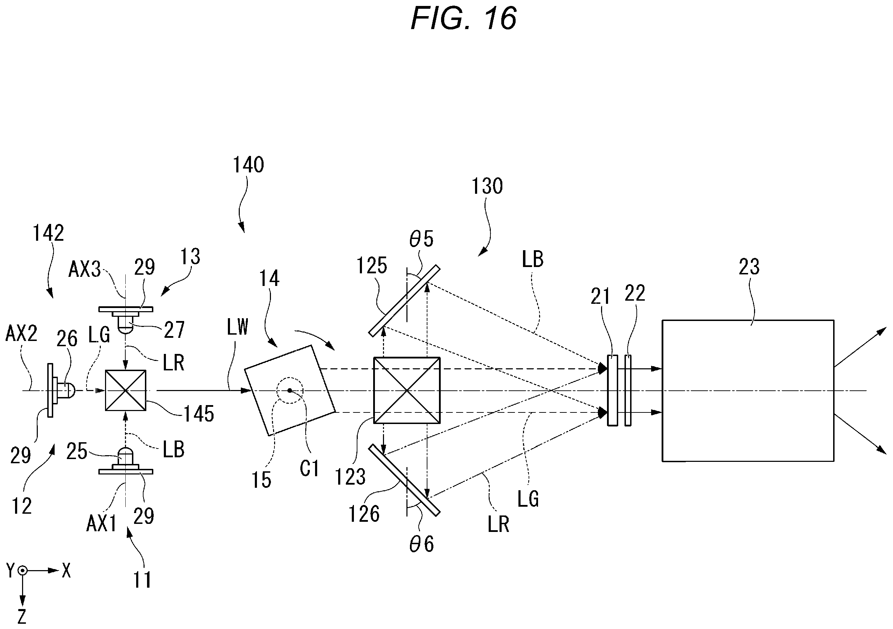

A seventh embodiment of the present disclosure will hereinafter be described using FIG. 16.

A projector according to the present embodiment is substantially the same in basic configuration as that of the sixth embodiment, but is different in configuration of the light source from that of the sixth embodiment.

FIG. 16 is a plan view showing a schematic configuration of the projector 130 according to the present embodiment.

In FIG. 16, the constituents common to FIG. 15 of the sixth embodiment are denoted by the same reference symbols, and the description thereof will be omitted.

As shown in FIG. 16, the projector 130 according to the present embodiment is provided with a light source device 140, the light modulation device 21, the exit side polarization plate 22, and the projection optical device 23.

The light source device 140 according to the present embodiment is provided with a light source 142, the transmissive optical part 14, the rotary drive device 15, the light separation element 123, the fifth reflecting element 125, and the sixth reflecting element 126. The light source 142 is provided with the first light source 11, the second light source 12, the third light source 13, and a light combining element 145.

The first light source 11 emits the blue light beam LB toward the -Z side. The second light source 12 emits the green light beam LG toward the +X side. The third light source 13 emits the red light beam LR toward the +Z side. The first light source 11 and the third light source 13 are arranged so as to be opposed to each other on the same axis.

The light combining element 145 is disposed at a position where the optical axis AX1 and the optical axis AX3 cross the optical axis AX2. The light combining element 145 has a configuration in which a dichroic film for transmitting green light and red light and reflecting blue light, and a dichroic film for transmitting green light and blue light and reflecting red light cross each other to form an X shape. The light combining element 145 combines the blue light beam LB emitted from the first light source 11, the green light beam LG emitted from the second light source 12, and the red light beam LR emitted from the third light source 13 with each other to emit the white light beam LW. The white light beam LW enters the transmissive optical part 14 without being separated according to the wavelength band.

The rest of the configuration of the projector 130 is substantially the same as in the sixth embodiment.

### Advantages of Seventh Embodiment

In the present embodiment, there can be obtained substantially the same advantages as those of the first embodiment such as an advantage that it is possible to solve the problem of the deterioration of the brightness and the contrast in the light modulation device 21, the occurrence of the color unevenness, the light loss in the projection optical device 23, and the illuminance unevenness caused by using the light source having the coherency, an advantage that it is possible to decrease the number of the interfaces between the optical system and the air by reducing the optical components, and thus, it is possible to reduce the light loss caused by the interfacial reflection, an advantage that it is possible to increase the light use efficiency without using the optical system for forming the light into a rectangular shape, an advantage that the area illumination becomes possible, and an advantage that it is possible to perform the color display with a simple configuration without using a color filter, and thus, it is possible to prevent the degradation of the chromatic purity and the luminance of the display image.

### Eighth Embodiment

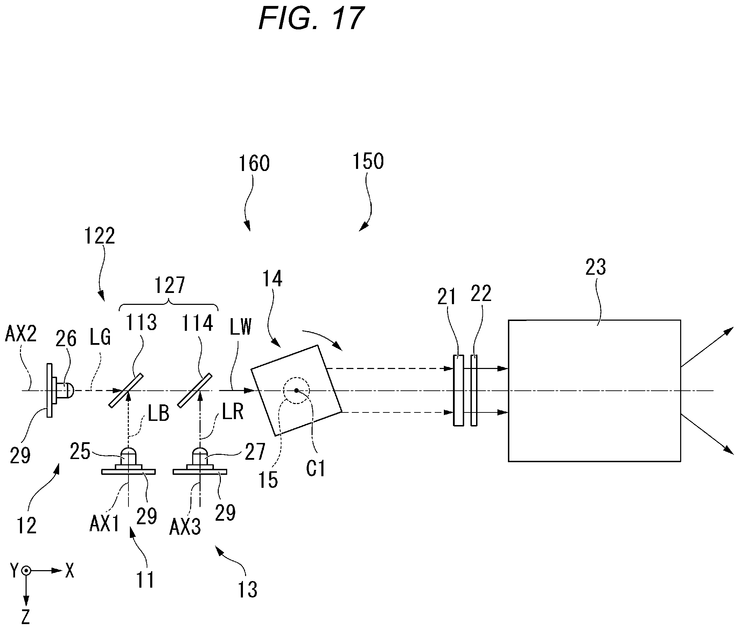

An eighth embodiment of the present disclosure will hereinafter be described using FIG. 17.

A light source device according to the present embodiment is substantially the same in basic configuration as that of the sixth embodiment, but is different in configuration of the projector, and light to be emitted from the light source device from that in the sixth embodiment.

FIG. 17 is a plan view showing a schematic configuration of the projector 150 according to the present embodiment.

In FIG. 17, the constituents common to the drawing in the sixth embodiment are denoted by the same reference symbols, and the description thereof will be omitted.

As shown in FIG. 17, the projector 150 according to the present embodiment is provided with a light source device 160, the light modulation device 21, the exit side polarization plate 22, and the projection optical device 23. Here, a difference between the light source device 160 according to the present embodiment and the light source device according to the sixth embodiment is that the light source device according to the sixth embodiment emits the white light beam LW on the one hand, and the light source device 160 emits the colored light beams in a time-sharing manner on the other hand.

The light source device 160 according to the present embodiment is provided with the light source 122, the transmissive optical part 14, and the rotary drive device 15. The light source 122 is provided with the first light source 11, the second light source 12, the third light source 13, and the light combining optical system 127.

The first light source 11 is arranged in a posture in which the optical axis AX1 of the first light source 11 is perpendicular to the optical axis AX2 of the second light source 12. The third light source 13 is arranged in a posture in which the optical axis AX3 of the third light source 13 is perpendicular to the optical axis AX2 of the second light source 12. The first light source 11 emits the blue light beam LB toward the -Z side. The third light source 13 emits the red light beam LR toward the -Z side. The second light source 12 emits the green light beam LG toward the +X side. The first light source 11 is arranged at a side near to the second light source 12, and the third light source 13 is arranged at a side far from the second light source 12 in this example, but this arrangement can be reversed.

The light combining optical system 127 is provided with the first light combining element 113 and the second light combining element 114. The first light combining element 113 is disposed at a position where the optical axis AX1 and the optical axis AX2 cross each other. The first light combining element 113 is formed of a dichroic mirror which transmits green light, and reflects blue light. The second light combining element 114 is disposed at a position where the optical axis AX2 and the optical axis AX3 cross each other. The second light combining element 114 is formed of a dichroic mirror which transmits green light and blue light, and reflects red light.

In the present embodiment, the blue light beam LB, the red light beam LR, and the green light beam LG are emitted from the transmissive optical part 14 toward the +X side, and then enter the light modulation device 21 in a time-sharing manner. As a result, there is no chance for the blue light beam LB, the green light beam LG, and the red light beam LR to overlap each other in the same area when illuminating the light modulation device 21, and scanning with the colored light beams is performed in the Z-axis direction in a time-sharing manner while illuminating strip-shaped areas extending in the Y-axis direction.

On the light modulation device 21 in the present embodiment, first, the blue light beam LB having the long axis in the Y-axis direction forms the first illumination target area, and at the same time, scanning with the blue light beam LB is performed on the light modulation device 21 with the rotation of the transmissive optical part 14. Then, the red light beam LR having the long axis in the Y-axis direction forms the second illumination target area, and at the same time, scanning with the red light beam LR is performed on the light modulation device 21 with the rotation of the transmissive optical part 14. Lastly, the green light beam LG having the long axis in the Y-axis direction forms the third illumination target area, and at the same time, scanning with the green light beam LG is performed on the light modulation device 21 with the rotation of the transmissive optical part 14. As described above, the illumination and the scanning with the colored light beams are performed on the light modulation device 21 in a time-sharing manner. It should be noted that it is assumed in the present embodiment that scanning with the illumination is performed on the light modulation device 21 in the order of the blue light beam LB, the red light beam LR, and the green light beam LG, but this is not a limitation.

The controller (not shown) in the present embodiment vertically scans the blue partial image, the green partial image, and the red partial image in sync with the scanning of the first illumination target area, the second illumination target area, and the third illumination target area described above. Thus, the light modulation device 21 performs the modulation of the colored light beams LB, LG, and LR different by the illumination target areas. Specifically, the light modulation device 21 performs the modulation of the blue light beam LB in the first illumination target area, performs the modulation of the green light beam LG in the second illumination target area, and performs the modulation of the red light beam LR in the third illumination target area, and by scanning the illumination target areas in the Z-axis direction, a full-color image is formed.

Further, periods of the first light emitting element 25, the second light emitting element 26, and the third light emitting element 27 to emit the light beams will be described. The first light emitting element 25 emits the light beam from when the incidence of the light beam is switched from the side surface 14c4 to the side surface 14c1 to when the incidence of the light beam is switched from the side surface 14c1 to the side surface 14c2 with the rotation of the transmissive optical part 14. Then, the second light emitting element 26 emits the light beam from when the incidence of the light beam is switched from the side surface 14c1 to the side surface 14c2 to when the incidence of the light beam is switched from the side surface 14c2 to the side surface 14c3 with the rotation of the transmissive optical part 14. Lastly, the third light emitting element 27 emits the light beam from when the incidence of the light beam is switched from the side surface 14c2 to the side surface 14c3 to when the incidence of the light beam is switched from the side surface 14c3 to the side surface 14c4 with the rotation of the transmissive optical part 14. By repeating the above, the first light emitting element 25, the second light emitting element 26, and the third light emitting element 27 emit the respective colored light beams in a time-sharing manner.

### Advantages of Eighth Embodiment

In the present embodiment, there can be obtained advantages such as an advantage that it is possible to solve the problem of the deterioration of the brightness and the contrast in the light modulation device 21, the occurrence of the color unevenness, the light loss in the projection optical device 23, and the illuminance unevenness caused by using the light source having the coherency, an advantage that it is possible to decrease the number of the interfaces between the optical system and the air by reducing the optical components, and thus, it is possible to reduce the light loss caused by the interfacial reflection, an advantage that it is possible to increase the light use efficiency without using the optical system for forming the light into a rectangular shape, an advantage that the area illumination becomes possible, and an advantage that it is possible to perform the color display with a simple configuration without using a color filter, and thus, it is possible to prevent the degradation of the chromatic purity and the luminance of the display image.

Further, in the case of the present embodiment, since there is not adopted the projector of the system in which the three colored light beams are made to enter the single microlens from the respective directions different from each other to thereby spatially separate the three colored light beams from each other, it is possible to make all of the colored light beams LB, LG, and LR perpendicularly enter the light modulation device 21. In this case, according to the present embodiment, the state in which the blue light beam LB, the green light beam LG, and the red light beam LR each perpendicularly enter the light modulation device 21 is always maintained. Thus, it is possible to stably obtain an image excellent in display quality such as contrast or color reproducibility. Further, by obtaining the configuration in which the colored light beams are emitted in a time-sharing manner, it is possible to decrease the amount of light entering the transmissive optical part 14 compared to when the three colored light beams enter the transmissive optical part 14 at a time, and therefore, it is possible to prevent the rise in temperature of the optical parts, and at the same time, there is made the contribution to the reduction of the influence of the thermal strain.

In the light source device according to the embodiments described above, there is cited the example of the polygonal column having an even number of side surfaces as the shape of the transmissive optical part. From the viewpoint that the stray light rarely occurs, and the light use efficiency is high, the polygonal column having an even number of side surfaces is desirable. It should be noted that as long as a set of a plane of incidence and an exit surface parallel to each other are provided, it is possible to adopt a shape other than the polygonal column having an even number of side surfaces. Further, the "rotation" in the embodiments of the present application can include performing similar scanning by oscillating the transmissive optical part.

Besides the above, the specific descriptions of the shape, the number, the arrangement, the material, and so on of the constituents of the light source device and the projector are not limited to those in the embodiments described above, and can arbitrarily be modified. Further, although in the embodiments described above, there is described the example of installing the light source device according to the present disclosure in the projector using the liquid crystal panel, the example is not a limitation. The light source device according to the present disclosure can also be applied to a projector using a digital micromirror device as the light modulation device.

## Claims

1. A light source device (10) comprising:
a first light source (11) configured to emit a first light beam (LB) in a first wavelength band;
a second light source (12) configured to emit a second light beam (LG) in a second wavelength band different from the first wavelength band;
a third light source (13) configured to emit a third light beam (LR) in a third wavelength band different from the first wavelength band and the second wavelength band; and
a transmissive optical part (14) which is rotatably supported, and which is configured to transmit the first light beam, the second light beam, and the third light beam, wherein
the transmissive optical part rotates centering on a rotational axis (C1) extending along a first direction (Y-axis) crossing an incident direction of the first light beam, an incident direction of the second light beam, and an incident direction of the third light beam,
a cross-sectional shape of the first light beam perpendicular to a principal ray of the first light beam emitted from the first light source is a shape having a long axis extending along the first direction,
a cross-sectional shape of the second light beam perpendicular to a principal ray of the second light beam emitted from the second light source is a shape having a long axis extending along the first direction,
a cross-sectional shape of the third light beam perpendicular to a principal ray of the third light beam emitted from the third light source is a shape having a long axis extending along the first direction,
the first light beam enters the transmissive optical part at a first position (P1),
the second light beam enters the transmissive optical part at a second position (P2) different from the first position,
the third light beam enters the transmissive optical part at a third position (P3) different from the first position and the second position,
in the transmissive optical part, a plane of incidence which the first light beam enters and an exit surface from which the first light beam entering the plane of incidence is emitted are parallel to each other, a plane of incidence which the second light beam enters and an exit surface from which the second light beam entering the plane of incidence is emitted are parallel to each other, and a plane of incidence which the third light beam enters and an exit surface from which the third light beam entering the plane of incidence is emitted are parallel to each other, and **characterized in that**
the first light source (11), the second light source (12) and the third light source (13) are configured to respectively emit the first, second and third light beams (LB, LG, LR), which are colored light beams, in a time-sharing manner.

2. The light source device (10) according to Claim 1, wherein
the transmissive optical part (14) is configured to perform scanning with each of the first light beam (LB), the second light beam (LG), and the third light beam (LR) in a direction perpendicular to the first direction (Y-axis) when rotating centering on the rotational axis (C1) to achieve a two-dimensional scan.

3. The light source device (10) according to Claims 1 or 2, wherein
the transmissive optical part (14) has a first surface (14a) and a second surface (14b) crossing the rotational axis (C1), and 2×m (m is a natural number no smaller than 2) side surfaces (14c1, 14c2, 14c3, 14c4) having contact with the first surface and the second surface, and
the plane of incidence and the exit surface are two of the 2×m side surfaces, the two side surfaces being parallel to each other.

4. The light source device (10) according to any one of Claims 1 to 3, wherein
the first light source (11) includes a first light emitting element (25) configured to emit light in the first wavelength band,
the second light source (12) includes a second light emitting element (26) configured to emit light in the second wavelength band,
the third light source (13) includes a third light emitting element (27) configured to emit light in the third wavelength band, and
each of the first light emitting element, the second light emitting element, and the third light emitting element is a laser diode configured to emit a laser beam.

5. The light source device (10) according to Claim 4, wherein
the first light source (11) includes a plurality of the first light emitting elements (25),
the second light source (12) includes a plurality of the second light emitting elements (26),
the third light source (13) includes a plurality of the third light emitting elements (27),
the plurality of first light emitting elements (25) is arranged along the first direction (Y-axis),
the plurality of second light emitting elements is arranged along the first direction, and
the plurality of third light emitting elements is arranged along the first direction.

6. The light source device (10) according to Claims 4 or 5, wherein
the first light source (11) further includes a first flux width adjustment optical system (65) configured to adjust a flux width in the first direction (Y-axis) of the first light beam (LB) emitted from the first light emitting element (25),
the second light source (12) further includes a second flux width adjustment optical system (66) configured to adjust a flux width in the first direction of the second light beam (LG) emitted from the second light emitting element (26), and
the third light source (13) further includes a third flux width adjustment optical system (67) configured to adjust a flux width in the first direction of the third light beam (LR) emitted from the third light emitting element (27).

7. The light source device (10) according to Claim 6, wherein
each of the first flux width adjustment optical system (65), the second flux width adjustment optical system (66), and the third flux width adjustment optical system (67) is an afocal optical system including a cylindrical lens (651, 652, 661, 662, 671, 672).

8. The light source device (10) according to any one of Claims 1 to 7, wherein
the transmissive optical part (14) is formed of quartz.

9. A projector (20) comprising:
the light source device (10) according to any one of Claims 1 to 8;
a light modulation device (21) configured to modulate light including the first light beam (LB), the second light beam (LG), and the third light beam (LR) emitted from the transmissive optical part (14) of the light source device based on image information; and
a projection optical device (23) configured to project the light modulated by the light modulation device.

10. The projector (20) according to Claim 9, further comprising:
a first reflecting element (17) configured to reflect the third light beam (LR) emitted from the transmissive optical part (14);
a second reflecting element (18) configured to reflect the first light beam (LB) emitted from the transmissive optical part; and
a light collecting element (43) configured to collect each of the first light beam reflected by the second reflecting element, the second light beam (LG) emitted from the transmissive optical part, and the third light beam reflected by the first reflecting element to guide the first light beam, the second light beam, and the third light beam collected to the light modulation device, wherein
the first light beam reflected by the second reflecting element, the second light beam emitted from the transmissive optical part, and the third light beam reflected by the first reflecting element enter the light collecting element from respective directions different from each other,
the light modulation device (21) includes
a first sub-pixel (PX1) configured to modulate the first light beam,
a second sub-pixel (PX2) configured to modulate the second light beam, and
a third sub-pixel (PX3) configured to modulate the third light beam, and
the light collecting element (43) is configured to make
the first light beam emitted from the second reflecting element enter the first sub-pixel,
the second light beam emitted from the transmissive optical part enter the second sub-pixel, and
the third light beam emitted from the first reflecting element enter the third sub-pixel.

11. The projector (20) according to Claim 10, wherein
the first reflecting element (17) is disposed on a light path of the first light beam (LB) emitted from the first light source (11), and is configured to transmit the first light beam, and
the second reflecting element (18) is disposed on a light path of the third light beam (LR) emitted from the third light source (13), and is configured to transmit the third light beam.

12. The projector (20) according to Claim 11, wherein
an optical axis (AX2) of the second light source (12) is perpendicular to an optical axis (AX1) of the first light source (11) and an optical axis (AX3) of the third light source (13).

13. The projector (20) according to Claim 9, further comprising:
a light combining element (91) configured to combine the first light beam (LB) emitted from the transmissive optical part (14), the second light beam (LG) emitted from the transmissive optical part, and the third light beam (LR) emitted from the transmissive optical part with each other, wherein
the first light beam is configured to form a first illumination target area (21B) having a long axis in the first direction (Y-axis) on the light modulation device (21),
the second light beam is configured to form a second illumination target area (21G) having a long axis in the first direction on the light modulation device,
the third light beam is configured to form a third illumination target area (21R) having a long axis in the first direction on the light modulation device,
each of the first illumination target area, the second illumination target area, and the third illumination target area is scanned in a second direction (Z-axis) perpendicular to the first direction on the light modulation device with a rotation of the transmissive optical part, and
the light modulation device (21) is configured to perform a modulation of the first light beam (LB) in the first illumination target area (21B), perform a modulation of the second light beam (LG) in the second illumination target area (21G), and perform a modulation of the third light beam (LR) in the third illumination target area (21R).

## Patentansprüche

1. Lichtquellenvorrichtung (10), umfassend:
eine erste Lichtquelle (11), die eingerichtet ist, einen ersten Lichtstrahl (LB) in einem ersten Wellenlängenband zu emittieren;
eine zweite Lichtquelle (12), die eingerichtet ist, einen zweiten Lichtstrahl (LG) in einem zweiten Wellenlängenband zu emittieren, das sich von dem ersten Wellenlängenband unterscheidet;
eine dritte Lichtquelle (13), die eingerichtet ist, einen dritten Lichtstrahl (LR) in einem dritten Wellenlängenband zu emittieren, das sich von dem ersten Wellenlängenband und dem zweiten Wellenlängenband unterscheidet; und
ein durchlässiges optisches Teil (14), das drehgelagert ist und das eingerichtet ist, den ersten Lichtstrahl, den zweiten Lichtstrahl und den dritten Lichtstrahl durchzulassen, wobei
das durchlässige optische Teil zentriert auf einer Drehachse (C1) dreht, die sich entlang einer ersten Richtung (Y-Achse) erstreckt, die eine Einfallsrichtung des ersten Lichtstrahls, eine Einfallsrichtung des zweiten Lichtstrahls und eine Einfallsrichtung des dritten Lichtstrahls schneidet,
eine Querschnittsform des ersten Lichtstrahls senkrecht zu einem Hauptstrahl des ersten Lichtstrahls, der von der ersten Lichtquelle emittiert wird, eine Form mit einer Längsachse ist, die sich entlang der ersten Richtung erstreckt,
eine Querschnittsform des zweiten Lichtstrahls senkrecht zu einem Hauptstrahl des zweiten Lichtstrahls, der von der zweiten Lichtquelle emittiert wird, eine Form mit einer Längsachse ist, die sich entlang der ersten Richtung erstreckt,
eine Querschnittsform des dritten Lichtstrahls senkrecht zu einem Hauptstrahl des dritten Lichtstrahls, der von der dritten Lichtquelle emittiert wird, eine Form mit einer Längsachse ist, die sich entlang der ersten Richtung erstreckt,
der erste Lichtstrahl in das durchlässige optische Teil an einer ersten Position (P1) eintritt,
der zweite Lichtstrahl in das durchlässige optische Teil an einer zweiten Position (P2) eintritt, die sich von der ersten Position unterscheidet,
der dritte Lichtstrahl in das durchlässige optische Teil an einer dritten Position (P3) eintritt, die sich von der ersten Position und der zweiten Position unterscheidet,
in dem durchlässigen optischen Teil, eine Einfallsebene, in die der erste Lichtstrahl eintritt, und eine Austrittsfläche, von der der erste Lichtstrahl, der in die Einfallsebene eintritt, emittiert wird, parallel zueinander sind, eine Einfallsebene, in die der zweite Lichtstrahl eintritt, und eine Austrittsfläche, von der der zweite Lichtstrahl, der in die Einfallsebene eintritt, emittiert wird, parallel zueinander sind, und eine Einfallsebene, in die der dritte Lichtstrahl eintritt, und eine Austrittsfläche von der der dritte Lichtstrahl der in die Einfallsebene eintritt, emittiert wird, parallel zueinander sind, **dadurch gekennzeichnet, dass** die erste Lichtquelle (11), die zweite Lichtquelle (12) und die dritte Lichtquelle (13) eingerichtet sin, den ersten, zweiten bzw. dritten Lichtstrahl (LB, LG, LR), die farbige Lichtstrahlen sind, zeitlich geteilt zu emittieren.

2. Lichtquellenvorrichtung (10) nach Anspruch 1, wobei
das durchlässige optische Teil (14) eingerichtet ist, eine Abtastung mit jedem des ersten Lichtstrahls (LB), des zweiten Lichtstrahls (LG) und des dritten Lichtstrahls (LR) in eine Richtung senkrecht zu der ersten Richtung (Y-Achse) durchzuführen, wenn es auf der Drehachse (C1) zentriert dreht, um eine zweidimensionale Abtastung zu erreichen.

3. Lichtquellenvorrichtung (10) nach Anspruch 1 oder 2, wobei
das durchlässige optische Teil (14) eine erste Oberfläche (14a) und eine zweite Oberfläche (14b), die die Drehachse (C1) schneiden, und 2×m (m ist eine natürliche Zahl nicht kleiner als 2) Seitenflächen (14c1, 14c2, 14c3, 14c4) in Kontakt mit der ersten Oberfläche und der zweiten Oberfläche aufweist, und
die Einfallsebene und die Austrittsfläche zwei der 2×m Seitenflächen sind, wobei die zwei Seitenflächen parallel zueinander sind.

4. Lichtquellenvorrichtung (10) nach einem der Ansprüche 1 bis 3, wobei
die erste Lichtquelle (11) ein erstes lichtemittierendes Element (25) beinhaltet, das eingerichtet ist, Licht in dem ersten Wellenlängenband zu emittieren ,
die zweite Lichtquelle (12) ein zweites lichtemittierendes Element (26) beinhaltet, das eingerichtet ist, Licht in dem zweiten Wellenlängenband zu emittieren,
die dritte Lichtquelle (13) ein drittes lichtemittierendes Element (27) beinhaltet, das eingerichtet ist, Licht in dem dritten Wellenlängenband zu emittieren, und
jedes des ersten lichtemittierenden Elements, des zweiten lichtemittierenden Elements und des dritten lichtemittierenden Elements eine Laserdiode ist, die eingerichtet ist, einen Laserstrahl zu emittieren.

5. Lichtquellenvorrichtung (10) nach Anspruch 4, wobei
die erste Lichtquelle (11) mehrere der ersten lichtemittierenden Elemente (25) beinhaltet,
die zweite Lichtquelle (12) mehrere der zweiten lichtemittierenden Elemente (26) beinhaltet,
die dritte Lichtquelle (13) mehrere der dritten lichtemittierenden Elemente (27) beinhaltet,
die mehreren ersten lichtemittierenden Elemente (25) entlang der ersten Richtung (Y-Achse) angeordnet sind,
die mehreren zweiten lichtemittierenden Elemente entlang der ersten Richtung angeordnet sind, und
die mehreren dritten lichtemittierenden Elemente entlang der ersten Richtung angeordnet sind.

6. Lichtquellenvorrichtung (10) nach Anspruch 4 oder 5, wobei
die erste Lichtquelle (11) ferner ein erstes optisches System (65) zur Flussbreitenanpassung beinhaltet, das eingerichtet ist, eine Flussbreite in der ersten Richtung (Y-Achse) des ersten Lichtstrahls (LB) anzupassen, der von dem ersten lichtemittierenden Element (25) emittiert wird,
die zweite Lichtquelle (12) ferner ein zweites optisches System (66) zur Flussbreitenanpassung beinhaltet, das eingerichtet ist, eine Flussbreite in der ersten Richtung des zweiten Lichtstrahls (LG) anzupassen, der von dem zweiten lichtemittierenden Element (26) emittiert wird, und
die dritte Lichtquelle (13) ferner ein drittes optisches System (67) zur Flussbreitenanpassung beinhaltet, das eingerichtet ist, eine Flussbreite in der ersten Richtung des dritten Lichtstrahls (LR) anzupassen, der von dem dritten lichtemittierenden Element (27) emittiert wird.

7. Lichtquellenvorrichtung (10) nach Anspruch 6, wobei
jedes des ersten optischen Systems (65) zur Flussbreitenanpassung, des zweiten optischen Systems (66) zur Flussbreitenanpassung und des dritten optischen Systems (67) zur Flussbreitenanpassung ein afokales optisches System ist, das eine zylindrische Linse (651, 652, 661, 662, 671, 672) beinhaltet.

8. Lichtquellenvorrichtung (10) nach einem der Ansprüche 1 bis 7, wobei
das durchlässige optische Teil (14) aus Quarz gebildet ist.

9. Projektor (20), umfassend:
die Lichtquellenvorrichtung (10) nach einem der Ansprüche 1 bis 8;
eine Lichtmodulationsvorrichtung (21), die eingerichtet ist, Licht, das den ersten Lichtstrahl (LB), den zweiten Lichtstrahl (LG) und den dritten Lichtstrahl (LR) beinhaltet, das von dem durchlässigen optischen Teil (14) der Lichtquellenvorrichtung emittiert wird, basierend auf Bildinformationen zu modulieren; und
eine optische Projektionsvorrichtung (23), die eingerichtet ist, das Licht zu projizieren, das von der Lichtmodulationsvorrichtung moduliert wird.

10. Projektor nach Anspruch 9, ferner umfassend:
ein erstes reflektierendes Element (17), das eingerichtet ist, den dritten Lichtstrahl (LR) zu reflektieren, der von dem durchlässigen optischen Teil (14) emittiert wird;
ein zweites reflektierendes Element (18), das eingerichtet ist, den ersten Lichtstrahl (LB) zu reflektieren, der von dem durchlässigen optischen Teil emittiert wird; und
ein Lichtsammelelement (43), das eingerichtet ist, jeden des ersten Lichtstrahls, der von dem zweiten reflektierenden Element reflektiert wird, des zweiten Lichtstrahls (LB), der von dem durchlässigen optischen Teil emittiert wird, und des dritten Lichtstrahls, der von dem ersten reflektierenden Element reflektiert wird, zu sammeln, um den ersten Lichtstrahl, den zweiten Lichtstrahl und den dritten Lichtstrahl, die gesammelt wurden, zu der Lichtmodulationsvorrichtung zu leiten, wobei
der erste Lichtstrahl, der von dem zweiten reflektierenden Element reflektiert wird, der zweite Lichtstrahl, der von dem durchlässigen optischen Teil emittiert wird, und der dritte Lichtstrahl, der von dem ersten reflektierenden Element reflektiert wird, aus voneinander unterschiedlichen Richtungen in das lichtsammelnde Element eintreten,
die Lichtmodulationsvorrichtung (21) beinhaltet
ein erstes Sub-Pixel (PX1), das eingerichtet ist, den ersten Lichtstrahl zu modulieren,
ein zweites Sub-Pixel (PX2), das eingerichtet ist, den zweiten Lichtstrahl zu modulieren, und
ein drittes Sub-Pixel (PX3), das eingerichtet ist, den dritten Lichtstrahl zu modulieren, und
das lichtsammelnde Element (43) eingerichtet ist,
den ersten Lichtstrahl, der von dem zweiten reflektierenden Element emittiert wird, in das erste Sub-Pixel eintreten zu lassen,
den zweiten Lichtstrahl, der von dem durchlässigen optischen Teil emittiert wird, in das zweite Sub-Pixel eintreten zu lassen, und
den dritten Lichtstrahl, der von dem ersten reflektierenden Element emittiert wird, in das dritte Sub-Pixel eintreten zu lassen.

11. Projektor (20) nach Anspruch 10, wobei
das erste reflektierende Element (17) auf einem Lichtweg des ersten Lichtstrahls (LB) angeordnet ist, der von der ersten Lichtquelle (11) emittiert wird, und eingerichtet ist, den ersten Lichtstrahl durchzulassen, und
das zweite reflektierende Element (18) auf einem Lichtweg des dritten Lichtstrahls (LR) angeordnet ist, der von der dritten Lichtquelle (13) emittiert wird, und eingerichtet ist, den dritten Lichtstrahl durchzulassen.

12. Projektor (20) nach Anspruch 11, wobei
eine optische Achse (AX2) der zweiten Lichtquelle (12) senkrecht zu einer optischen Achse (AX1) der ersten Lichtquelle (11) und einer optischen Achse (AX3) der dritten Lichtquelle (13) ist.

13. Projektor (20) nach Anspruch 9, ferner umfassend:
ein lichtkombinierendes Element (91), das eingerichtet ist, den ersten Lichtstrahl (LB), der von dem durchlässigen optischen Teil (14) emittiert wird, den zweiten Lichtstrahl (LG), der von dem durchlässigen optischen Teil emittiert wird, und den dritten Lichtstrahl (LR), der von dem durchlässigen optischen Teil emittiert wird, miteinander zu kombinieren, wobei
der erste Lichtstrahl die eingerichtet ist, einen ersten Beleuchtungszielbereich (21B) mit einer Längsachse in der ersten Richtung (Y-Achse) auf der Lichtmodulationsvorrichtung (21) zu bilden,
der zweite Lichtstrahl eingerichtet ist, einen zweiten Beleuchtungszielbereich (21G) mit einer Längsachse in der ersten Richtung auf der Lichtmodulationsvorrichtung zu bilden,
der dritte Lichtstrahl eingerichtet ist, einen dritten Beleuchtungszielbereich (21R) mit einer Längsachse in der ersten Richtung auf der Lichtmodulationsvorrichtung zu bilden,
wobei jeder des ersten Beleuchtungszielbereichs, des zweiten Beleuchtungszielbereichs und des dritten Beleuchtungszielbereichs in einer zweiten Richtung (Z-Achse) senkrecht zu der ersten Richtung auf der Lichtmodulationsvorrichtung mit einer Drehung des durchlässigen optischen Teils abgetastet wird, und
die Lichtmodulationsvorrichtung (21) eingerichtet ist, eine Modulation des ersten Lichtstrahls (LB) in dem ersten Beleuchtungszielbereich (21B) durchzuführen, eine Modulation des zweiten Lichtstrahls (LG) in dem zweiten Beleuchtungszielbereich (21G) durchzuführen und eine Modulation des dritten Lichtstrahls (LR) in dem dritten Beleuchtungszielbereich (21R) durchzuführen.

## Revendications

1. Dispositif de source de lumière (10) comprenant :
une première source de lumière (11) configurée pour émettre un premier faisceau lumineux (LB) dans une première bande de longueurs d'onde ;
une deuxième source de lumière (12) configurée pour émettre un deuxième faisceau lumineux (LG) dans une deuxième bande de longueurs d'onde différente de la première bande de longueurs d'onde ;
une troisième source de lumière (13) configurée pour émettre un troisième faisceau lumineux (LR) dans une troisième bande de longueurs d'onde différente de la première bande de longueurs d'onde et de la deuxième bande de longueurs d'onde ; et
une partie optique transmissive (14) supportée de façon rotative et configurée pour transmettre le premier faisceau lumineux, le deuxième faisceau lumineux et le troisième faisceau lumineux, dans lequel
la partie optique transmissive tourne de façon centrée sur un axe de rotation (C1) s'étendant le long d'une première direction (axe Y) coupant une direction d'incidence du premier faisceau lumineux, une direction d'incidence du deuxième faisceau lumineux et une direction d'incidence du troisième faisceau lumineux,
une forme de section transversale du premier faisceau lumineux perpendiculaire à un rayon principal du premier faisceau lumineux émis à partir de la première source de lumière est une forme présentant un axe long s'étendant le long de la première direction,
une forme de section transversale du deuxième faisceau lumineux perpendiculaire à un rayon principal du deuxième faisceau lumineux émis à partir de la deuxième source de lumière est une forme présentant un axe long s'étendant le long de la première direction,
une forme de section transversale du troisième faisceau lumineux perpendiculaire à un rayon principal du troisième faisceau lumineux émis à partir de la troisième section longitudinale est une forme présentant un axe long s'étendant le long de la première direction,
le premier faisceau lumineux entre dans la partie optique transmissive à une première position (P1),
le deuxième faisceau lumineux entre dans la partie optique transmissive à une deuxième position (P2) différente de la première position,
le troisième faisceau lumineux entre dans la partie optique transmissive à une troisième position (P3) différente de la première position et de la deuxième position,
dans la partie optique transmissive, un plan d'incidence dans lequel le premier faisceau lumineux entre et une surface de sortie à partir de laquelle le premier faisceau lumineux entrant dans le plan d'incidence est émis sont parallèles entre eux, un plan d'incidence dans lequel le deuxième faisceau lumineux entre et une surface de sortie à partir de laquelle le deuxième faisceau lumineux entrant dans le plan d'incidence est émis sont parallèles entre eux, et un plan d'incidence dans lequel le troisième faisceau lumineux entre et une surface de sortie à partir de laquelle le troisième faisceau lumineux entrant dans le plan d'incidence est émis sont parallèles entre eux, et **caractérisé en ce que**
la première source de lumière (11), la deuxième source de lumière (12) et la troisième source de lumière (13) sont configurées pour émettre respectivement les premier, deuxième et troisième faisceaux lumineux (LB, LG, LR), lesquels sont des faisceaux lumineux colorés, selon un temps partagé.

2. Dispositif de source de lumière (10) selon la revendication 1, dans lequel
la partie optique transmissive (14) est configurée pour effectuer un balayage avec chacun parmi le premier faisceau lumineux (LB), le deuxième faisceau lumineux (LG) et le troisième faisceau lumineux (LR) dans une direction perpendiculaire à la première direction (axe Y) lors de la rotation centrée sur l'axe de rotation (C1) afin de réaliser un balayage bidimensionnel.

3. Dispositif de source de lumière (10) selon les revendications 1 ou 2, dans lequel
la partie optique transmissive (14) comporte une première surface (14a) et une deuxième surface (14b) coupant l'axe de rotation (C1), et 2×m (m étant un nombre naturel pas plus petit que 2) surfaces latérales (14c1, 14c2, 14c3, 14c4) en contact avec la première surface et la deuxième surface, et
le plan d'incidence et la surface de sortie sont deux des 2xm surfaces latérales, les deux surfaces latérales étant parallèles l'une à l'autre.

4. Dispositif de source de lumière (10) selon l'une quelconque des revendications 1 à 3, dans lequel la première source de lumière (11) inclut un premier élément émetteur de lumière (25) configuré pour émettre de la lumière dans la première bande de longueurs d'onde,
la deuxième source de lumière (12) inclut un deuxième élément émetteur de lumière (26) configuré pour émettre de la lumière dans la deuxième bande de longueurs d'onde,
la troisième source de lumière (13) inclut un troisième élément émetteur de lumière (27) configuré pour émettre de la lumière dans la troisième bande de longueurs d'onde, et
chacun parmi le premier élément émetteur de lumière, le deuxième élément émetteur de lumière et le troisième élément émetteur de lumière est une diode laser configurée pour émettre un faisceau laser.

5. Dispositif de source de lumière (10) selon la revendication 4, dans lequel
la première source de lumière (11) inclut une pluralité de premiers éléments émetteurs de lumière (25),
la deuxième source de lumière (12) inclut une pluralité de deuxièmes éléments émetteurs de lumière (26),
la troisième source de lumière (13) inclut une pluralité de troisièmes éléments émetteurs de lumière (27),
la pluralité de premiers éléments émetteurs de lumière (25) sont disposés le long de la première direction (axe Y),
la pluralité de deuxièmes éléments émetteurs de lumière sont disposés le long de la première direction, et
la pluralité de troisièmes éléments émetteurs de lumière sont disposés le long de la première direction.

6. Dispositif de source de lumière (10) selon les revendications 4 ou 5, dans lequel
la première source de lumière (11) inclut en outre un premier système optique de réglage de largeur de flux (65) configuré pour régler une largeur de flux dans la première direction (axe Y) du premier faisceau lumineux (LB) émis à partir du premier élément émetteur de lumière (25),
la deuxième source de lumière (12) inclut en outre un deuxième système optique de réglage de largeur de flux (66) configuré pour régler une largeur de flux dans la première direction du deuxième faisceau lumineux (LG) émis à partir du deuxième élément émetteur de lumière (26),
la troisième source de lumière (13) inclut en outre un troisième système optique de réglage de largeur de flux (67) configuré pour régler une largeur de flux dans la première direction du troisième faisceau lumineux (LR) émis à partir du troisième élément émetteur de lumière (27).

7. Dispositif de source de lumière (10) selon la revendication 6, dans lequel
chacun parmi le premier système optique de réglage de largeur de flux (65), le deuxième système optique de réglage de largeur de flux (66) et le troisième système optique de réglage de largeur de flux (67) est un système optique afocal incluant une lentille cylindrique (651, 652, 661, 662, 671, 672).

8. Dispositif de source de lumière (10) selon l'une quelconque des revendications 1 à 7, dans lequel
la partie optique transmissive (14) est constituée de quartz.

9. Projecteur (20) comprenant :
un dispositif de source de lumière (10) selon l'une quelconque des revendications 1 à 8 ;
un dispositif de modulation de lumière (21) configuré pour moduler une lumière incluant le premier faisceau lumineux (LB), le deuxième faisceau lumineux (LG) et le troisième faisceau lumineux (LR) émis à partir de la partie optique transmissive (14) du dispositif de source de lumière sur la base d'informations d'image ; et
un dispositif optique de projection (23) configuré pour projeter la lumière modulée par dispositif de modulation de lumière.

10. Projecteur (20) selon la revendication 9, comprenant en outre :
un premier élément réfléchissant (17) configuré pour réfléchir le troisième faisceau lumineux (LR) émis à partir de la partie optique transmissive (14) ;
un deuxième élément réfléchissant (18) configuré pour réfléchir le premier faisceau lumineux (LB) émis à partir de la partie optique transmissive ; et
un élément de collecte de lumière (43) configuré pour collecter chacun parmi le premier faisceau lumineux réfléchi par le deuxième élément réfléchissant, le deuxième faisceau lumineux (LG) émis à partir de la partie optique transmissive, et le troisième faisceau lumineux réfléchi par le premier élément réfléchissant, afin de guider le premier faisceau lumineux, le deuxième faisceau lumineux et le troisième faisceau lumineux collectés vers le dispositif de modulation de lumière, dans lequel
le premier faisceau lumineux réfléchi par le deuxième élément réfléchissant, le deuxième faisceau lumineux émis à partir de la partie optique transmissive, et le troisième faisceau lumineux réfléchi par le premier élément réfléchissant entrent dans l'élément de collecte de lumière depuis des directions respectives différentes les unes des autres,
le dispositif de modulation de lumière (21) inclut
un premier sous-pixel (PX1) configuré pour moduler le premier faisceau lumineux,
un deuxième sous-pixel (PX2) configuré pour moduler le deuxième faisceau lumineux, et
un troisième sous-pixel (PX3) configuré pour moduler le troisième faisceau lumineux, et
l'élément de collecte de lumière (43) est configuré pour
faire entrer le premier faisceau lumineux émis à partir du deuxième élément réfléchissant dans le premier sous-pixel,
faire entrer le deuxième faisceau lumineux émis à partir de la partie optique transmissive dans le deuxième sous-pixel, et
faire entrer le troisième faisceau lumineux émis à partir du premier élément réfléchissant dans le troisième sous-pixel.

11. Projecteur (20) selon la revendication 10, dans lequel
le premier élément réfléchissant (17) est disposé sur un trajet de lumière du premier faisceau lumineux (LB) émis à partir de la première source de lumière (11), et est configuré pour transmettre le premier faisceau lumineux, et
le deuxième élément réfléchissant (18) est disposé sur un trajet de lumière du troisième faisceau lumineux (LR) émis à partir de la troisième source de lumière (13), et est configuré pour transmettre le troisième faisceau lumineux.

12. Projecteur (20) selon la revendication 11, dans lequel
un axe optique (AX2) de la deuxième source de lumière (12) est perpendiculaire à un axe optique (AX1) de la première source de lumière (11) et à un axe optique (AX3) de la troisième source de lumière (13).

13. Projecteur (20) selon la revendication 9, comprenant en outre :
un élément de combinaison de lumière (91) configuré pour combiner entre eux le premier faisceau lumineux (LB) émis à partir de la partie optique transmissive (14), le deuxième faisceau lumineux (LG) émis à partir de la partie optique transmissive et le troisième faisceau lumineux (LR) émis à partir de la partie optique transmissive, dans lequel
le premier faisceau lumineux est configuré pour former une première zone cible d'éclairage (21B) présentant un axe long dans la première direction (axe Y) sur le dispositif de modulation de lumière (21),
le deuxième faisceau lumineux est configuré pour former une deuxième zone cible d'éclairage (21G) présentant un axe long dans la première direction sur le dispositif de modulation de lumière,
le troisième faisceau lumineux est configuré pour former une troisième zone cible d'éclairage (21R) présentant un axe long dans la première direction sur le dispositif de modulation de lumière,
chacune parmi la première zone cible d'éclairage, la deuxième zone cible d'éclairage et la troisième zone cible d'éclairage est balayée dans une deuxième direction (axe Z) perpendiculaire à la première direction sur le dispositif de modulation de lumière avec une rotation de la partie optique transmissive, et
le dispositif de modulation de lumière (21) est configuré pour effectuer une modulation du premier faisceau lumineux (LB) dans la première zone cible d'éclairage (21B), pour effectuer une modulation du deuxième faisceau lumineux (LG) dans la deuxième zone cible d'éclairage (21G), et pour effectuer une modulation du troisième faisceau lumineux (LR) dans la troisième zone cible d'éclairage (21R).
